# EUROPEAN PATENT APPLICATION

(11) **EP 4 651 099 A1**
(43) Date of publication of application: **19.11.2025**
(21) Application number: 25176040.1
(22) Date of filing: 13.05.2025
(51) Int. Cl.: G06V 10/82

(54) **TECHNIQUES FOR GENERATING CONTENT**

(30) Priority: 13.05.2024 US 202463646581 P; 07.06.2024 US 202463657568 P; 12.05.2025 US 202519205157
(71) Applicant: Apple Inc., Cupertino, CA 95014 (US)
(72) Inventor: DESELAERS, Thomas, Cupertino, California, 95014 (US); CHEN, Jennifer P., Cupertino, California, 95014 (US); HATORI, Jun, Cupertino, California, 95014 (US); BARINOVA, Olga, Cupertino, California, 95014 (US); DIXON, Ryan S., Cupertino, California, 95014 (US)
(74) Representative: Simmons & Simmons

(57) **Abstract**

The present disclosure generally relates to generating content. Some techniques are for generating content using edges of content in accordance with some embodiments. Other techniques are for generating content by rasterizing content in accordance with some embodiments. Other techniques are for generating content based on sketch complexity in accordance with some embodiments. Other techniques are for generating content by pre-processing different portions of content differently in accordance with some embodiments. Other techniques are for an application to generate content using edges of content in accordance with some embodiments. Other techniques are for an application to generate content by rasterizing content in accordance with some embodiments. Other techniques are for an application to generate content based on sketch complexity in accordance with some embodiments. Other techniques are for an application to generate content by pre-processing different portions of content differently in accordance with some embodiments.

## Description

### CROSS-REFERENCE TO RELATED APPLICATIONS

This application claims priority to U.S. Provisional Patent Application Serial No. 63/657,568, entitled "TECHNIQUES FOR GENERATING CONTENT" filed June 7, 2024, and to U.S. Provisional Patent Application Serial No. 63/646,581, entitled "TECHNIQUES FOR GENERATING CONTENT" filed May 13, 2024, which are hereby incorporated by reference in their entireties for all purposes.

### BACKGROUND

Demand for generating content has grown significantly. However, existing solutions often lack flexibility to effectively integrate inputs of different modalities to generate content. Accordingly, there is a need for improved systems for generating content.

### SUMMARY

Current techniques for generating content are generally ineffective and/or inefficient. For example, some techniques require users to rely on one type of input such as text to generate content. This disclosure provides more effective and/or efficient techniques for generating content using examples of processes including a machine learning model and sketch preprocessing pipelines. It should be recognized that that such techniques optionally complement or replace other techniques for generating content. For example, other types of content such as video and/or animation can be generated using techniques described herein. In addition, techniques optionally complement or replace other techniques for generating content.

Some techniques described herein include generating content using a machine learning model conditioned based on an image of a sketch and/or associated information. Such associated information can include conditioning the machine learning model using one or more edges of the image and/or the sketch. Other techniques described herein include generating content using a machine learning model by separating a sketch from other content. For example, when receiving content containing an image with a sketch drawn on top of it, the computer system can rasterize the sketch portion of the content without rasterizing the non-sketch portion. In such an example, the rasterized sketch and the original non-sketch content can be used as separate inputs for a machine learning model to generate content. Other techniques described herein include adjusting the focus on a sketch for content generation based on a complexity of the sketch. For example, the computer system analyzes a complexity of the sketch and determines the degree to which the sketch should weigh on the generation of content. In such an example, if the sketch is highly complex, the computer system can put more emphasis on the sketch details when generating the content. Contrarily, if the sketch is simple, the computer system can put less emphasis on the sketch and rely more heavily on other inputs, such as user-supplied text associated with the sketch that is describing a desired output image such as a stylized output sketch, image, and/or emoji. Other techniques described herein include selectively rasterizing portions of content for content generation. For example, when detecting an input corresponding to a request to generate content based on provided inputs (e.g., a combination of sketch, image, and/or text), the computer system converts different portions of the content into different formats. In such an example, a first portion of the content, such as a sketch, can be converted into a rasterized image, while a second portion, such as text, may be converted into a transcript. The computer system then generates content based on the rasterized image portion and the transcribed text portion.

In some embodiments, a method that is performed at a device is described. In some embodiments, the method comprises: receiving first content; receiving a first set of one or more words corresponding to the first content; conditioning a diffusion model based on a set of one or more edges of the first content; and after conditioning the diffusion model based on the set of one or more edges, generating, using the diffusion model, second content based on the first set of one or more words.

In some embodiments, a non-transitory computer-readable storage medium storing one or more programs configured to be executed by one or more processors of a device is described. In some embodiments, the one or more programs includes instructions for: receiving first content; receiving a first set of one or more words corresponding to the first content; conditioning a diffusion model based on a set of one or more edges of the first content; and after conditioning the diffusion model based on the set of one or more edges, generating, using the diffusion model, second content based on the first set of one or more words.

In some embodiments, a transitory computer-readable storage medium storing one or more programs configured to be executed by one or more processors of a device is described. In some embodiments, the one or more programs includes instructions for: receiving first content; receiving a first set of one or more words corresponding to the first content; conditioning a diffusion model based on a set of one or more edges of the first content; and after conditioning the diffusion model based on the set of one or more edges, generating, using the diffusion model, second content based on the first set of one or more words.

In some embodiments, a device is described. In some embodiments, the device comprises one or more processors and memory storing one or more programs configured to be executed by the one or more processors. In some embodiments, the one or more programs includes instructions for: receiving first content; receiving a first set of one or more words corresponding to the first content; conditioning a diffusion model based on a set of one or more edges of the first content; and after conditioning the diffusion model based on the set of one or more edges, generating, using the diffusion model, second content based on the first set of one or more words.

In some embodiments, a device is described. In some embodiments, the device comprises means for performing each of the following steps: receiving first content; receiving a first set of one or more words corresponding to the first content; conditioning a diffusion model based on a set of one or more edges of the first content; and after conditioning the diffusion model based on the set of one or more edges, generating, using the diffusion model, second content based on the first set of one or more words.

In some embodiments, a computer program product is described. In some embodiments, the computer program product comprises one or more programs configured to be executed by one or more processors of a device. In some embodiments, the one or more programs include instructions for: receiving first content; receiving a first set of one or more words corresponding to the first content; conditioning a diffusion model based on a set of one or more edges of the first content; and after conditioning the diffusion model based on the set of one or more edges, generating, using the diffusion model, second content based on the first set of one or more words.

In some embodiments, a method that is performed at a device is described. In some embodiments, the method comprises: receiving first content; rasterizing a sketch portion of the first content to generate rasterized content without rasterizing a non-sketch portion of the first content; and after rasterizing the sketch portion of the first content to generate rasterized content, generating, using a diffusion model that is based on the rasterized content and the non-sketch portion of the first content, second content.

In some embodiments, a non-transitory computer-readable storage medium storing one or more programs configured to be executed by one or more processors of a device is described. In some embodiments, the one or more programs includes instructions for: receiving first content; rasterizing a sketch portion of the first content to generate rasterized content without rasterizing a non-sketch portion of the first content; and after rasterizing the sketch portion of the first content to generate rasterized content, generating, using a diffusion model that is based on the rasterized content and the non-sketch portion of the first content, second content.

In some embodiments, a transitory computer-readable storage medium storing one or more programs configured to be executed by one or more processors of a device is described. In some embodiments, the one or more programs includes instructions for: receiving first content; rasterizing a sketch portion of the first content to generate rasterized content without rasterizing a non-sketch portion of the first content; and after rasterizing the sketch portion of the first content to generate rasterized content, generating, using a diffusion model that is based on the rasterized content and the non-sketch portion of the first content, second content.

In some embodiments, a device is described. In some embodiments, the device comprises one or more processors and memory storing one or more programs configured to be executed by the one or more processors. In some embodiments, the one or more programs includes instructions for: receiving first content; rasterizing a sketch portion of the first content to generate rasterized content without rasterizing a non-sketch portion of the first content; and after rasterizing the sketch portion of the first content to generate rasterized content, generating, using a diffusion model that is based on the rasterized content and the non-sketch portion of the first content, second content.

In some embodiments, a device is described. In some embodiments, the device comprises means for performing each of the following steps: receiving first content; rasterizing a sketch portion of the first content to generate rasterized content without rasterizing a non-sketch portion of the first content; and after rasterizing the sketch portion of the first content to generate rasterized content, generating, using a diffusion model that is based on the rasterized content and the non-sketch portion of the first content, second content.

In some embodiments, a computer program product is described. In some embodiments, the computer program product comprises one or more programs configured to be executed by one or more processors of a device. In some embodiments, the one or more programs include instructions for: receiving first content; rasterizing a sketch portion of the first content to generate rasterized content without rasterizing a non-sketch portion of the first content; and after rasterizing the sketch portion of the first content to generate rasterized content, generating, using a diffusion model that is based on the rasterized content and the non-sketch portion of the first content, second content.

In some embodiments, a method that is performed at a device is described. In some embodiments, the method comprises: receiving sketched content; after receiving the sketched content: in accordance with a determination that the sketched content has a first complexity, generating first computer-generated content that is based on the sketched content by a first amount, wherein the first amount corresponds to the first complexity; and in accordance with a determination that the sketched content has a second complexity different from the first complexity, generating second computer-generated content that is based on the sketched content by a second amount different from the first amount, wherein the second amount corresponds to the second complexity.

In some embodiments, a non-transitory computer-readable storage medium storing one or more programs configured to be executed by one or more processors of a device is described. In some embodiments, the one or more programs includes instructions for: receiving sketched content; after receiving the sketched content: in accordance with a determination that the sketched content has a first complexity, generating first computer-generated content that is based on the sketched content by a first amount, wherein the first amount corresponds to the first complexity; and in accordance with a determination that the sketched content has a second complexity different from the first complexity, generating second computer-generated content that is based on the sketched content by a second amount different from the first amount, wherein the second amount corresponds to the second complexity.

In some embodiments, a transitory computer-readable storage medium storing one or more programs configured to be executed by one or more processors of a device is described. In some embodiments, the one or more programs includes instructions for: receiving sketched content; after receiving the sketched content: in accordance with a determination that the sketched content has a first complexity, generating first computer-generated content that is based on the sketched content by a first amount, wherein the first amount corresponds to the first complexity; and in accordance with a determination that the sketched content has a second complexity different from the first complexity, generating second computer-generated content that is based on the sketched content by a second amount different from the first amount, wherein the second amount corresponds to the second complexity.

In some embodiments, a device is described. In some embodiments, the device comprises one or more processors and memory storing one or more programs configured to be executed by the one or more processors. In some embodiments, the one or more programs includes instructions for: receiving sketched content; after receiving the sketched content: in accordance with a determination that the sketched content has a first complexity, generating first computer-generated content that is based on the sketched content by a first amount, wherein the first amount corresponds to the first complexity; and in accordance with a determination that the sketched content has a second complexity different from the first complexity, generating second computer-generated content that is based on the sketched content by a second amount different from the first amount, wherein the second amount corresponds to the second complexity.

In some embodiments, a device is described. In some embodiments, the device comprises means for performing each of the following steps: receiving sketched content; after receiving the sketched content: in accordance with a determination that the sketched content has a first complexity, generating first computer-generated content that is based on the sketched content by a first amount, wherein the first amount corresponds to the first complexity; and in accordance with a determination that the sketched content has a second complexity different from the first complexity, generating second computer-generated content that is based on the sketched content by a second amount different from the first amount, wherein the second amount corresponds to the second complexity.

In some embodiments, a computer program product is described. In some embodiments, the computer program product comprises one or more programs configured to be executed by one or more processors of a device. In some embodiments, the one or more programs include instructions for: receiving sketched content; after receiving the sketched content: in accordance with a determination that the sketched content has a first complexity, generating first computer-generated content that is based on the sketched content by a first amount, wherein the first amount corresponds to the first complexity; and in accordance with a determination that the sketched content has a second complexity different from the first complexity, generating second computer-generated content that is based on the sketched content by a second amount different from the first amount, wherein the second amount corresponds to the second complexity.

In some embodiments, a method that is performed at a device that is communication with one or more input devices is described. In some embodiments, the method comprises: detecting, via the one or more input devices, an input corresponding to a request to generate content; and in response to detecting the input corresponding to the request to generate content: converting a first portion of first content to rasterized content; converting a second portion, different from the first portion, of the first content to a transcription; and generating, based on the rasterized content and the transcription, second content.

In some embodiments, a non-transitory computer-readable storage medium storing one or more programs configured to be executed by one or more processors of a device that is communication with one or more input devices is described. In some embodiments, the one or more programs includes instructions for: detecting, via the one or more input devices, an input corresponding to a request to generate content; and in response to detecting the input corresponding to the request to generate content: converting a first portion of first content to rasterized content; converting a second portion, different from the first portion, of the first content to a transcription; and generating, based on the rasterized content and the transcription, second content.

In some embodiments, a transitory computer-readable storage medium storing one or more programs configured to be executed by one or more processors of a device that is communication with one or more input devices is described. In some embodiments, the one or more programs includes instructions for: detecting, via the one or more input devices, an input corresponding to a request to generate content; and in response to detecting the input corresponding to the request to generate content: converting a first portion of first content to rasterized content; converting a second portion, different from the first portion, of the first content to a transcription; and generating, based on the rasterized content and the transcription, second content.

In some embodiments, a device that is communication with one or more input devices is described. In some embodiments, the device that is communication with one or more input devices comprises one or more processors and memory storing one or more programs configured to be executed by the one or more processors. In some embodiments, the one or more programs includes instructions for: detecting, via the one or more input devices, an input corresponding to a request to generate content; and in response to detecting the input corresponding to the request to generate content: converting a first portion of first content to rasterized content; converting a second portion, different from the first portion, of the first content to a transcription; and generating, based on the rasterized content and the transcription, second content.

In some embodiments, a device that is communication with one or more input devices is described. In some embodiments, the device that is communication with one or more input devices comprises means for performing each of the following steps: detecting, via the one or more input devices, an input corresponding to a request to generate content; and in response to detecting the input corresponding to the request to generate content: converting a first portion of first content to rasterized content; converting a second portion, different from the first portion, of the first content to a transcription; and generating, based on the rasterized content and the transcription, second content.

In some embodiments, a computer program product is described. In some embodiments, the computer program product comprises one or more programs configured to be executed by one or more processors of a device that is communication with one or more input devices. In some embodiments, the one or more programs include instructions for: detecting, via the one or more input devices, an input corresponding to a request to generate content; and in response to detecting the input corresponding to the request to generate content: converting a first portion of first content to rasterized content; converting a second portion, different from the first portion, of the first content to a transcription; and generating, based on the rasterized content and the transcription, second content.

In some embodiments, a method that is performed at an application of a device is described. In some embodiments, the method comprises: obtaining a first content; obtaining a first set of one or more words corresponding to the first content; generating a first request to generate, using a diffusion model, second content based on the first set of one or more words; and providing the first request to an operating system via an image generation API for generating, using a conditioned diffusion model, content based on the first set of one or more words, wherein the conditioned diffusion model is a model that is conditioned based on the first content and a set of one or more edges of the first content.

In some embodiments, a non-transitory computer-readable storage medium storing one or more programs configured to be executed by one or more processors of a device executing an application is described. In some embodiments, the one or more programs includes instructions for: obtaining a first content; obtaining a first set of one or more words corresponding to the first content; generating a first request to generate, using a diffusion model, second content based on the first set of one or more words; and providing the first request to an operating system via an image generation API for generating, using a conditioned diffusion model, content based on the first set of one or more words, wherein the conditioned diffusion model is a model that is conditioned based on the first content and a set of one or more edges of the first content.

In some embodiments, a transitory computer-readable storage medium storing one or more programs configured to be executed by one or more processors of a device executing an application is described. In some embodiments, the one or more programs includes instructions for: obtaining a first content; obtaining a first set of one or more words corresponding to the first content; generating a first request to generate, using a diffusion model, second content based on the first set of one or more words; and providing the first request to an operating system via an image generation API for generating, using a conditioned diffusion model, content based on the first set of one or more words, wherein the conditioned diffusion model is a model that is conditioned based on the first content and a set of one or more edges of the first content.

In some embodiments, a device executing an application is described. In some embodiments, the device comprises one or more processors and memory storing one or more programs configured to be executed by the one or more processors. In some embodiments, the one or more programs includes instructions for: obtaining a first content; obtaining a first set of one or more words corresponding to the first content; generating a first request to generate, using a diffusion model, second content based on the first set of one or more words; and providing the first request to an operating system via an image generation API for generating, using a conditioned diffusion model, content based on the first set of one or more words, wherein the conditioned diffusion model is a model that is conditioned based on the first content and a set of one or more edges of the first content.

In some embodiments, a device executing an application is described. In some embodiments, the device comprises means for performing each of the following steps: obtaining a first content; obtaining a first set of one or more words corresponding to the first content; generating a first request to generate, using a diffusion model, second content based on the first set of one or more words; and providing the first request to an operating system via an image generation API for generating, using a conditioned diffusion model, content based on the first set of one or more words, wherein the conditioned diffusion model is a model that is conditioned based on the first content and a set of one or more edges of the first content.

In some embodiments, a computer program product is described. In some embodiments, the computer program product comprises one or more programs configured to be executed by one or more processors of a device executing an application. In some embodiments, the one or more programs include instructions for: obtaining a first content; obtaining a first set of one or more words corresponding to the first content; generating a first request to generate, using a diffusion model, second content based on the first set of one or more words; and providing the first request to an operating system via an image generation API for generating, using a conditioned diffusion model, content based on the first set of one or more words, wherein the conditioned diffusion model is a model that is conditioned based on the first content and a set of one or more edges of the first content.

In some embodiments, a method that is performed at an application of a device is described. In some embodiments, the method comprises: obtaining a first content; generating a first request to generate, using a diffusion model that is based on rasterized content and a non-sketch portion of the first content, second content, wherein the first request includes the first content; and providing the first request to an operating system via an image generation API for: rasterizing a sketch portion of the first content to generate rasterized content without rasterizing a non-sketch portion of the first content generation; and after rasterizing the sketch portion of the first content to generate rasterized content, generating, using the diffusion model that is based on the rasterized content and the non-sketch portion of the first content, the second content.

In some embodiments, a non-transitory computer-readable storage medium storing one or more programs configured to be executed by one or more processors of a device executing an application is described. In some embodiments, the one or more programs includes instructions for: obtaining a first content; generating a first request to generate, using a diffusion model that is based on rasterized content and a non-sketch portion of the first content, second content, wherein the first request includes the first content; and providing the first request to an operating system via an image generation API for: rasterizing a sketch portion of the first content to generate rasterized content without rasterizing a non-sketch portion of the first content generation; and after rasterizing the sketch portion of the first content to generate rasterized content, generating, using the diffusion model that is based on the rasterized content and the non-sketch portion of the first content, the second content.

In some embodiments, a transitory computer-readable storage medium storing one or more programs configured to be executed by one or more processors of a device executing an application is described. In some embodiments, the one or more programs includes instructions for: obtaining a first content; generating a first request to generate, using a diffusion model that is based on rasterized content and a non-sketch portion of the first content, second content, wherein the first request includes the first content; and providing the first request to an operating system via an image generation API for: rasterizing a sketch portion of the first content to generate rasterized content without rasterizing a non-sketch portion of the first content generation; and after rasterizing the sketch portion of the first content to generate rasterized content, generating, using the diffusion model that is based on the rasterized content and the non-sketch portion of the first content, the second content.

In some embodiments, a device executing an application is described. In some embodiments, the device comprises one or more processors and memory storing one or more programs configured to be executed by the one or more processors. In some embodiments, the one or more programs includes instructions for: obtaining a first content; generating a first request to generate, using a diffusion model that is based on rasterized content and a non-sketch portion of the first content, second content, wherein the first request includes the first content; and providing the first request to an operating system via an image generation API for: rasterizing a sketch portion of the first content to generate rasterized content without rasterizing a non-sketch portion of the first content generation; and after rasterizing the sketch portion of the first content to generate rasterized content, generating, using the diffusion model that is based on the rasterized content and the non-sketch portion of the first content, the second content.

In some embodiments, a device executing an application is described. In some embodiments, the device comprises means for performing each of the following steps: obtaining a first content; generating a first request to generate, using a diffusion model that is based on rasterized content and a non-sketch portion of the first content, second content, wherein the first request includes the first content; and providing the first request to an operating system via an image generation API for: rasterizing a sketch portion of the first content to generate rasterized content without rasterizing a non-sketch portion of the first content generation; and after rasterizing the sketch portion of the first content to generate rasterized content, generating, using the diffusion model that is based on the rasterized content and the non-sketch portion of the first content, the second content.

In some embodiments, a computer program product is described. In some embodiments, the computer program product comprises one or more programs configured to be executed by one or more processors of a device executing an application. In some embodiments, the one or more programs include instructions for: obtaining a first content; generating a first request to generate, using a diffusion model that is based on rasterized content and a non-sketch portion of the first content, second content, wherein the first request includes the first content; and providing the first request to an operating system via an image generation API for: rasterizing a sketch portion of the first content to generate rasterized content without rasterizing a non-sketch portion of the first content generation; and after rasterizing the sketch portion of the first content to generate rasterized content, generating, using the diffusion model that is based on the rasterized content and the non-sketch portion of the first content, the second content.

In some embodiments, a method that is performed at an application of a device is described. In some embodiments, the method comprises: obtaining a sketched content; generating a first request to generate first computer-generated content that is based on the sketched content, wherein the first request includes the sketched content; and providing the first request to an operating system via an image generation API for: in accordance with a determination that the sketched content has a first complexity, generating the first computer-generated content based on the sketched content by a first amount, wherein the first amount corresponds to the first complexity; and in accordance with a determination that the sketched content has a second complexity different from the first complexity, generating the second computer-generated content based on the sketched content by a second amount different from the first amount, wherein the second amount corresponds to the second complexity.

In some embodiments, a non-transitory computer-readable storage medium storing one or more programs configured to be executed by one or more processors of a device executing an application is described. In some embodiments, the one or more programs includes instructions for: obtaining a sketched content; generating a first request to generate first computer-generated content that is based on the sketched content, wherein the first request includes the sketched content; and providing the first request to an operating system via an image generation API for: in accordance with a determination that the sketched content has a first complexity, generating the first computer-generated content based on the sketched content by a first amount, wherein the first amount corresponds to the first complexity; and in accordance with a determination that the sketched content has a second complexity different from the first complexity, generating the second computer-generated content based on the sketched content by a second amount different from the first amount, wherein the second amount corresponds to the second complexity.

In some embodiments, a transitory computer-readable storage medium storing one or more programs configured to be executed by one or more processors of a device executing an application is described. In some embodiments, the one or more programs includes instructions for: obtaining a sketched content; generating a first request to generate first computer-generated content that is based on the sketched content, wherein the first request includes the sketched content; and providing the first request to an operating system via an image generation API for: in accordance with a determination that the sketched content has a first complexity, generating the first computer-generated content based on the sketched content by a first amount, wherein the first amount corresponds to the first complexity; and in accordance with a determination that the sketched content has a second complexity different from the first complexity, generating the second computer-generated content based on the sketched content by a second amount different from the first amount, wherein the second amount corresponds to the second complexity.

In some embodiments, a device executing an application is described. In some embodiments, the device comprises one or more processors and memory storing one or more programs configured to be executed by the one or more processors. In some embodiments, the one or more programs includes instructions for: obtaining a sketched content; generating a first request to generate first computer-generated content that is based on the sketched content, wherein the first request includes the sketched content; and providing the first request to an operating system via an image generation API for: in accordance with a determination that the sketched content has a first complexity, generating the first computer-generated content based on the sketched content by a first amount, wherein the first amount corresponds to the first complexity; and in accordance with a determination that the sketched content has a second complexity different from the first complexity, generating the second computer-generated content based on the sketched content by a second amount different from the first amount, wherein the second amount corresponds to the second complexity.

In some embodiments, a device executing an application is described. In some embodiments, the device comprises means for performing each of the following steps: obtaining a sketched content; generating a first request to generate first computer-generated content that is based on the sketched content, wherein the first request includes the sketched content; and providing the first request to an operating system via an image generation API for: in accordance with a determination that the sketched content has a first complexity, generating the first computer-generated content based on the sketched content by a first amount, wherein the first amount corresponds to the first complexity; and in accordance with a determination that the sketched content has a second complexity different from the first complexity, generating the second computer-generated content based on the sketched content by a second amount different from the first amount, wherein the second amount corresponds to the second complexity.

In some embodiments, a computer program product is described. In some embodiments, the computer program product comprises one or more programs configured to be executed by one or more processors of a device executing an application. In some embodiments, the one or more programs include instructions for: obtaining a sketched content; generating a first request to generate first computer-generated content that is based on the sketched content, wherein the first request includes the sketched content; and providing the first request to an operating system via an image generation API for: in accordance with a determination that the sketched content has a first complexity, generating the first computer-generated content based on the sketched content by a first amount, wherein the first amount corresponds to the first complexity; and in accordance with a determination that the sketched content has a second complexity different from the first complexity, generating the second computer-generated content based on the sketched content by a second amount different from the first amount, wherein the second amount corresponds to the second complexity.

In some embodiments, a method that is performed at an application of a device is described. In some embodiments, the method comprises: obtaining first content; generating a first request to generate content that is based on the first content, wherein the first request includes the first content; and providing the first request to an operating system via an image generation API for: converting a first portion of the first content to rasterized content; converting a second portion, different from the first portion, of the first content to a transcription; and generating, based on the rasterized content and the transcription, second content.

In some embodiments, a non-transitory computer-readable storage medium storing one or more programs configured to be executed by one or more processors of a device executing an application is described. In some embodiments, the one or more programs includes instructions for: obtaining first content; generating a first request to generate content that is based on the first content, wherein the first request includes the first content; and providing the first request to an operating system via an image generation API for: converting a first portion of the first content to rasterized content; converting a second portion, different from the first portion, of the first content to a transcription; and generating, based on the rasterized content and the transcription, second content.

In some embodiments, a transitory computer-readable storage medium storing one or more programs configured to be executed by one or more processors of a device executing an application is described. In some embodiments, the one or more programs includes instructions for: obtaining first content; generating a first request to generate content that is based on the first content, wherein the first request includes the first content; and providing the first request to an operating system via an image generation API for: converting a first portion of the first content to rasterized content; converting a second portion, different from the first portion, of the first content to a transcription; and generating, based on the rasterized content and the transcription, second content.

In some embodiments, a device executing an application is described. In some embodiments, the device comprises one or more processors and memory storing one or more programs configured to be executed by the one or more processors. In some embodiments, the one or more programs includes instructions for: obtaining first content; generating a first request to generate content that is based on the first content, wherein the first request includes the first content; and providing the first request to an operating system via an image generation API for: converting a first portion of the first content to rasterized content; converting a second portion, different from the first portion, of the first content to a transcription; and generating, based on the rasterized content and the transcription, second content.

In some embodiments, a device executing an application is described. In some embodiments, the device comprises means for performing each of the following steps: obtaining first content; generating a first request to generate content that is based on the first content, wherein the first request includes the first content; and providing the first request to an operating system via an image generation API for: converting a first portion of the first content to rasterized content; converting a second portion, different from the first portion, of the first content to a transcription; and generating, based on the rasterized content and the transcription, second content.

In some embodiments, a computer program product is described. In some embodiments, the computer program product comprises one or more programs configured to be executed by one or more processors of a device executing an application. In some embodiments, the one or more programs include instructions for: obtaining first content; generating a first request to generate content that is based on the first content, wherein the first request includes the first content; and providing the first request to an operating system via an image generation API for: converting a first portion of the first content to rasterized content; converting a second portion, different from the first portion, of the first content to a transcription; and generating, based on the rasterized content and the transcription, second content.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1A is a block diagram illustrating a compute system in accordance with some embodiments.
FIG. 1B is a flow diagram illustrating a method for an application in accordance with some embodiments.
FIG. 1C is a flow diagram illustrating another method for an application in accordance with some embodiments.
FIG. 1D is a block diagram illustrating a device in accordance with some embodiments.
FIG. 2 is a block diagram illustrating a device with interconnected subsystems in accordance with some embodiments.
FIG. 3 illustrates exemplary user interfaces for generating content from a sketch in accordance with some embodiments.
FIG. 4 is a flow diagram illustrating a method for generating content using edges of content in accordance with some embodiments.
FIG. 5 illustrates exemplary user interfaces for generating content from a sketch and an image in accordance with some embodiments.
FIG. 6 is a flow diagram illustrating a method for generating content by rasterizing a portion of content in accordance with some embodiments.
FIG. 7 is a flow diagram illustrating a method for generating content based on sketch complexity in accordance with some embodiments.
FIG. 8 is a flow diagram illustrating a method for generating content by pre-processing different portions of content differently in accordance with some embodiments.
FIG. 9 is a flow diagram illustrating a method for an application to generate content using edges of content in accordance with some embodiments.
FIG. 10 is a flow diagram illustrating a method for an application to generate content by rasterizing a portion of content in accordance with some embodiments.
FIG. 11 is a flow diagram illustrating a method for an application to generate content based on sketch complexity in accordance with some embodiments.
FIG. 12 is a flow diagram illustrating a method for an application to generate content by pre-processing different portions of content differently in accordance with some embodiments.

### DETAILED DESCRIPTION

The following description sets forth exemplary methods, parameters, and the like. It should be recognized, however, that such description is not intended as a limitation on the scope of the present disclosure but is instead provided as a description of exemplary embodiments.

Methods described herein can include one or more steps that are contingent upon one or more conditions being satisfied. It should be understood that a method can occur over multiple iterations of the same process with different steps of the method being satisfied in different iterations. For example, if a method requires performing a first step upon a determination that a set of one or more criteria is met and a second step upon a determination that the set of one or more criteria is not met, a person of ordinary skill in the art would appreciate that the steps of the method are repeated until both conditions, in no particular order, are satisfied. Thus, a method described with steps that are contingent upon a condition being satisfied can be rewritten as a method that is repeated until each of the conditions described in the method are satisfied. This, however, is not required of system or computer readable medium claims where the system or computer readable medium claims include instructions for performing one or more steps that are contingent upon one or more conditions being satisfied. Because the instructions for the system or computer readable medium claims are stored in one or more processors and/or at one or more memory locations, the system or computer readable medium claims include logic that can determine whether the one or more conditions have been satisfied without explicitly repeating steps of a method until all of the conditions upon which steps in the method are contingent have been satisfied. A person having ordinary skill in the art would also understand that, similar to a method with contingent steps, a system or computer readable storage medium can repeat the steps of a method as many times as needed to ensure that all of the contingent steps have been performed.

Although the following description uses terms "first," "second," etc. to describe various elements, these elements should not be limited by the terms. In some embodiments, these terms are used to distinguish one element from another. For example, a first subsystem could be termed a second subsystem, and, similarly, a second subsystem device or a subsystem device could be termed a first subsystem device, without departing from the scope of the various described embodiments. In some embodiments, the first subsystem and the second subsystem are two separate references to the same subsystem. In some embodiments, the first subsystem and the second subsystem are both subsystems, but they are not the same subsystem or the same type of subsystem.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when," "upon," "in response to determining," "in response to detecting," or "in accordance with a determination that" depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," or "in accordance with a determination that [the stated condition or event]" depending on the context.

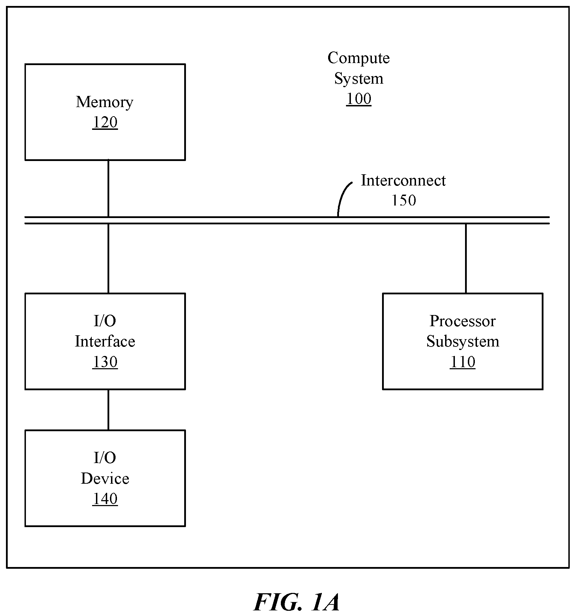

Turning to FIG. 1A, a block diagram of compute system 100 is illustrated. Compute system 100 is a non-limiting example of a compute system that can be used to perform functionality described herein. It should be recognized that other computer architectures of a compute system can be used to perform functionality described herein.

In the illustrated example, compute system 100 includes processor subsystem 110 communicating with (e.g., wired or wirelessly) memory 120 (e.g., a system memory) and I/O interface 130 via interconnect 150 (e.g., a system bus, one or more memory locations, or other communication channel for connecting multiple components of compute system 100). In addition, I/O interface 130 is communicating with (e.g., wired or wirelessly) to I/O device 140. In some embodiments, I/O interface 130 is included with I/O device 140 such that the two are a single component. It should be recognized that there can be one or more I/O interfaces, with each I/O interface communicating with one or more I/O devices. In some embodiments, multiple instances of processor subsystem 110 can be communicating via interconnect 150.

Compute system 100 can be any of various types of devices, including, but not limited to, a system on a chip, a server system, a personal computer system (e.g., a smartphone, a smartwatch, a wearable device, a tablet, a laptop computer, and/or a desktop computer), a sensor, or the like. In some embodiments, compute system 100 is included or communicating with a physical component for the purpose of modifying the physical component in response to an instruction. In some embodiments, compute system 100 receives an instruction to modify a physical component and, in response to the instruction, causes the physical component to be modified. In some embodiments, the physical component is modified via an actuator, an electric signal, and/or algorithm. Examples of such physical components include an acceleration control, a break, a gear box, a hinge, a motor, a pump, a refrigeration system, a spring, a suspension system, a steering control, a pump, a vacuum system, and/or a valve. In some embodiments, a sensor includes one or more hardware components that detect information about a physical environment in proximity to (e.g., surrounding) the sensor. In some embodiments, a hardware component of a sensor includes a sensing component (e.g., an image sensor or temperature sensor), a transmitting component (e.g., a laser or radio transmitter), a receiving component (e.g., a laser or radio receiver), or any combination thereof. Examples of sensors include an angle sensor, a chemical sensor, a brake pressure sensor, a contact sensor, a non-contact sensor, an electrical sensor, a flow sensor, a force sensor, a gas sensor, a humidity sensor, an image sensor (e.g., a camera sensor, a radar sensor, and/or a LiDAR sensor), an inertial measurement unit, a leak sensor, a level sensor, a light detection and ranging system, a metal sensor, a motion sensor, a particle sensor, a photoelectric sensor, a position sensor (e.g., a global positioning system), a precipitation sensor, a pressure sensor, a proximity sensor, a radio detection and ranging system, a radiation sensor, a speed sensor (e.g., measures the speed of an object), a temperature sensor, a time-of-flight sensor, a torque sensor, and an ultrasonic sensor. In some embodiments, a sensor includes a combination of multiple sensors. In some embodiments, sensor data is captured by fusing data from one sensor with data from one or more other sensors. Although a single compute system is shown in FIG. 1A, compute system 100 can also be implemented as two or more compute systems operating together.

In some embodiments, processor subsystem 110 includes one or more processors or processing units configured to execute program instructions to perform functionality described herein. For example, processor subsystem 110 can execute an operating system, a middleware system, one or more applications, or any combination thereof.

In some embodiments, the operating system manages resources of compute system 100. Examples of types of operating systems covered herein include batch operating systems (e.g., Multiple Virtual Storage (MVS)), time-sharing operating systems (e.g., Unix), distributed operating systems (e.g., Advanced Interactive eXecutive (AIX), network operating systems (e.g., Microsoft Windows Server), and real-time operating systems (e.g., QNX). In some embodiments, the operating system includes various procedures, sets of instructions, software components, and/or drivers for controlling and managing general system tasks (e.g., memory management, storage device control, power management, or the like) and for facilitating communication between various hardware and software components. In some embodiments, the operating system uses a priority-based scheduler that assigns a priority to different tasks that processor subsystem 110 can execute. In such examples, the priority assigned to a task is used to identify a next task to execute. In some embodiments, the priority-based scheduler identifies a next task to execute when a previous task finishes executing. In some embodiments, the highest priority task runs to completion unless another higher priority task is made ready.

In some embodiments, the middleware system provides one or more services and/or capabilities to applications (e.g., the one or more applications running on processor subsystem 110) outside of what the operating system offers (e.g., data management, application services, messaging, authentication, API management, or the like). In some embodiments, the middleware system is designed for a heterogeneous computer cluster to provide hardware abstraction, low-level device control, implementation of commonly used functionality, message-passing between processes, package management, or any combination thereof. Examples of middleware systems include Lightweight Communications and Marshalling (LCM), PX4, Robot Operating System (ROS), and ZeroMQ. In some embodiments, the middleware system represents processes and/or operations using a graph architecture, where processing takes place in nodes that can receive, post, and multiplex sensor data messages, control messages, state messages, planning messages, actuator messages, and other messages. In such examples, the graph architecture can define an application (e.g., an application executing on processor subsystem 110 as described above) such that different operations of the application are included with different nodes in the graph architecture.

In some embodiments, a message sent from a first node in a graph architecture to a second node in the graph architecture is performed using a publish-subscribe model, where the first node publishes data on a channel in which the second node can subscribe. In such examples, the first node can store data in memory (e.g., memory 120 or some local memory of processor subsystem 110) and notify the second node that the data has been stored in the memory. In some embodiments, the first node notifies the second node that the data has been stored in the memory by sending a pointer (e.g., a memory pointer, such as an identification of a memory location) to the second node so that the second node can access the data from where the first node stored the data. In some embodiments, the first node would send the data directly to the second node so that the second node would not need to access a memory based on data received from the first node.

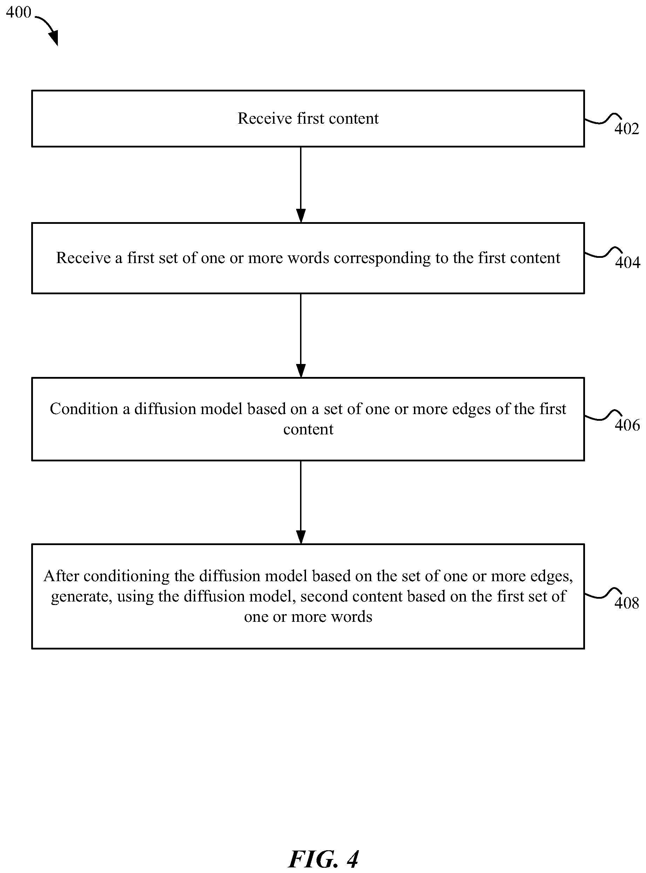

Memory 120 can include a computer readable medium (e.g., non-transitory or transitory computer readable medium) usable to store (e.g., configured to store, assigned to store, and/or that stores) program instructions executable by processor subsystem 110 to cause compute system 100 to perform various operations described herein. For example, memory 120 can store program instructions to implement the functionality associated with methods 400, 600, 700, 800, 900, 1000, 1100 and 1200 (FIGS. 4, 6, 7, 8, 9, 10, 11 and 12) described below.

Memory 120 can be implemented using different physical, non-transitory memory media, such as hard disk storage, floppy disk storage, removable disk storage, flash memory, random access memory (RAM-SRAM, EDO RAM, SDRAM, DDR SDRAM, RAMBUS RAM, or the like), read only memory (PROM, EEPROM, or the like), or the like. Memory in compute system 100 is not limited to primary storage such as memory 120. Compute system 100 can also include other forms of storage such as cache memory in processor subsystem 110 and secondary storage on I/O device 140 (e.g., a hard drive, storage array, etc.). In some embodiments, these other forms of storage can also store program instructions executable by processor subsystem 110 to perform operations described herein. In some embodiments, processor subsystem 110 (or each processor within processor subsystem 110) contains a cache or other form of on-board memory.

I/O interface 130 can be any of various types of interfaces configured to communicate with other devices. In some embodiments, I/O interface 130 includes a bridge chip (e.g., Southbridge) from a front-side bus to one or more back-side buses. I/O interface 130 can communicate with one or more I/O devices (e.g., I/O device 140) via one or more corresponding buses or other interfaces. Examples of I/O devices include storage devices (hard drive, optical drive, removable flash drive, storage array, SAN, or their associated controller), network interface devices (e.g., to a local or wide-area network), sensor devices (e.g., camera, radar, LiDAR, ultrasonic sensor, GPS, inertial measurement device, or the like), and auditory or visual output devices (e.g., speaker, light, screen, projector, or the like). In some embodiments, compute system 100 is communicating with a network via a network interface device (e.g., configured to communicate over Wi-Fi, Bluetooth, Ethernet, or the like). In some embodiments, compute system 100 is directly or wired to the network.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, software modules, and/or components. As used herein, modules are software modules that include computer-executable instructions.

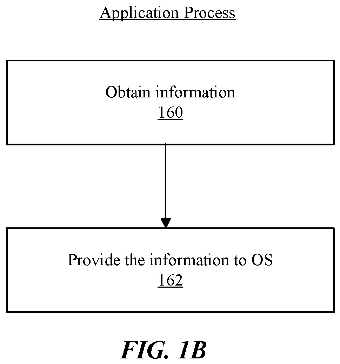

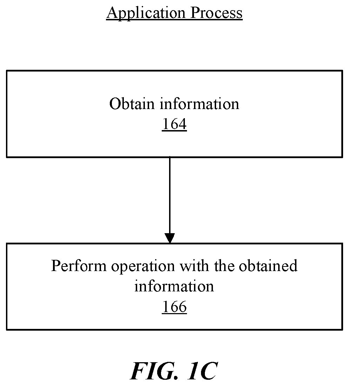

Implementations within the scope of the present disclosure include a computer-readable storage medium that encodes instructions organized as an application (e.g., application 170) that, when executed by one or more processing units, control an electronic device (e.g., device 168) to perform the method of FIG. 1B, the method of FIG. 1C, and/or one or more other processes and/or methods described herein.

It should be recognized that application 170 can be any suitable type of application, including, for example, one or more of: a messaging application, a maps application, a fitness application, a health application, a digital payments application, a media application, and/or a social network application. In some embodiments, application 170 is an application that is pre-installed on device 168 at purchase (e.g., a first party application). In other embodiments, application 170 is an application that is provided to device 168 via an operating system update file (e.g., a first party application or a second party application). In other embodiments, application 170 is an application that is provided via an application store. In some embodiments, the application store can be an application store that is pre-installed on device 168 at purchase (e.g., a first party application store). In other embodiments, the application store is a third-party application store (e.g., an application store that is provided by another application store, downloaded via a network, and/or read from a storage device).

Referring to FIG. 1B, application 170 obtains information (e.g., 160). In some embodiments, the information obtained at 160 includes positional information, time information, notification information, user information, environment information, electronic device state information, weather information, media information, historical information, event information, hardware information, and/or motion information. In some embodiments, in response to and/or after obtaining the information at 160, application 170 provides the information to operating system (e.g., S120).

Referring to FIG. 1C, application 170 obtains information (e.g., 164). In some embodiments, the information obtained at 164 includes positional information, time information, notification information, user information, environment information electronic device state information, weather information, media information, historical information, event information, hardware information and/or motion information. in response to and/or after obtaining the information at 164, application 170 performs an operation with the information (e.g., 166). In some embodiments, the operation performed at 166 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of operating system 180 based on the information.

In some embodiments, one or more steps of the method of FIG. 1B and/or the method of FIG. 1C is performed in response to a trigger. In some embodiments, the trigger includes detection of an event, a notification received from operating system 180, a user input, and/or a response to a call to an API provided by operating system 180.

In some embodiments, the instructions of application 170, when executed, control device 168 to perform the method of FIG. 1B and/or the method of FIG. 1C by calling an application programming interface (API) (e.g., API 176) provided by operating system 180. In some embodiments, application 170 performs at least a portion of the method of FIG. 1B and/or the method of FIG. 1C without calling API 176.

In some embodiments, one or more steps of the method of FIG. 1B and/or the method of FIG. 1C includes calling an API (e.g., API 176) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

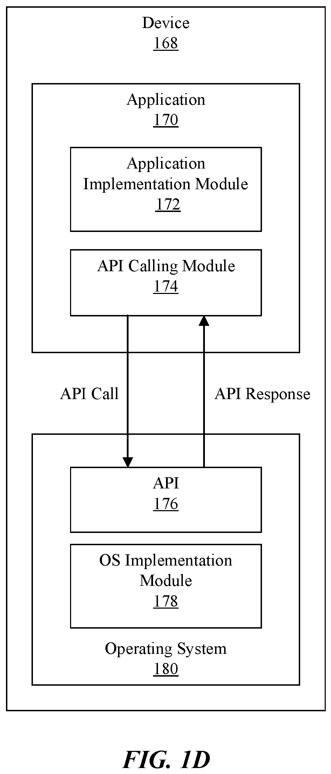

Referring to FIG. 1D, device 168 is illustrated. In some embodiments, device 168 is a personal computing device, a smart phone, a smart watch, a fitness tracker, a head mounted display (HMD) device, a media device, a communal device, a speaker, a television, and/or a tablet. As illustrated in FIG. 1D, device 168 includes application 170 and operating system 180. Application 170 includes application implementation module 172 and API calling module 174. Operating system 180 includes API 176 and OS implementation module 178. It should be recognized that device 168, application 170, and/or operating system 180 can include more, fewer, and/or different components than illustrated in FIG. 1D.

In some embodiments, application implementation module 172 includes a set of one or more instructions corresponding to one or more operations performed by application 170. For example, when application 170 is a messaging application, application implementation module 172 can include operations to receive and send messages. In some embodiments, application implementation module 172 communicates with API calling module to communicate with operating system 180 via API 176.

In some embodiments, API 176 is a software module (e.g., a collection of computer-readable instructions) that provides an interface that allows a different module (e.g., API calling module 174) to access and/or use one or more functions, methods, procedures, data structures, classes, and/or other services provided by OS implementation module 178 of operating system 180. For example, API-calling module 174 can access a feature of OS implementation module 178 through one or more API calls or invocations (e.g., embodied by a function or a method call) exposed by API 176 and can pass data and/or control information using one or more parameters via the API calls or invocations. In some embodiments, API 176 allows application 170 to use a service provided by a Software Development Kit (SDK) library. In other embodiments, application 170 incorporates a call to a function or method provided by the SDK library and provided by API 176 or uses data types or objects defined in the SDK library and provided by API 176. In some embodiments, API-calling module 174 makes an API call via API 176 to access and use a feature of OS implementation module 178 that is specified by API 176. In such embodiments, OS implementation module 178 can return a value via API 176 to API-calling module 174 in response to the API call. The value can report to application 170 the capabilities or state of a hardware component of device 168, including those related to aspects such as input capabilities and state, output capabilities and state, processing capability, power state, storage capacity and state, and/or communications capability. In some embodiments, API 176 is implemented in part by firmware, microcode, or other low level logic that executes in part on the hardware component.

In some embodiments, API 176 allows a developer of API-calling module 174 (which can be a third-party developer) to leverage a feature provided by OS implementation module 178. In such embodiments, there can be one or more API-calling modules (e.g., including API-calling module 174) that communicate with OS implementation module 178. In some embodiments, API 176 allows multiple API-calling modules written in different programming languages to communicate with OS implementation module 178 (e.g., API 176 can include features for translating calls and returns between OS implementation module 178 and API-calling module 174) while API 176 is implemented in terms of a specific programming language. In some embodiments, API-calling module 174 calls APIs from different providers such as a set of APIs from an OS provider, another set of APIs from a plug-in provider, and/or another set of APIs from another provider (e.g., the provider of a software library) or creator of the another set of APIs.

Examples of API 176 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device 168. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, OS implementation module 178 is an operating system software module (e.g., a collection of computer-readable instructions) that is constructed to perform an operation in response to receiving an API call via API 176. In some embodiments, OS implementation module 178 is constructed to provide an API response (via API 176) as a result of processing an API call. By way of example, OS implementation module 178 and API-calling module 180 can each be any one of an operating system, a library, a device driver, an API, an application program, or other module. It should be understood that OS implementation module 178 and API-calling module 174 can be the same or different type of module from each other. In some embodiments, OS implementation module 178 is embodied at least in part in firmware, microcode, or other hardware logic.

In some embodiments, OS implementation module 178 returns a value through API 176 in response to an API call from API-calling module 174. While API 176 defines the syntax and result of an API call (e.g., how to invoke the API call and what the API call does), API 176 might not reveal how OS implementation module 178 accomplishes the function specified by the API call. Various API calls are transferred via the one or more application programming interfaces between API-calling module 174 and OS implementation module 178. Transferring the API calls can include issuing, initiating, invoking, calling, receiving, returning, and/or responding to the function calls or messages. In other words, transferring can describe actions by either of API-calling module 174 or OS implementation module 178. In some embodiments, a function call or other invocation of API 176 sends and/or receives one or more parameters through a parameter list or other structure.

In some embodiments, OS implementation module 178 provides more than one API, each providing a different view of or with different aspects of functionality implemented by OS implementation module 178. For example, one API of OS implementation module 178 can provide a first set of functions and can be exposed to third party developers, and another API of OS implementation module 178 can be hidden (e.g., not exposed) and provide a subset of the first set of functions and also provide another set of functions, such as testing or debugging functions which are not in the first set of functions. In some embodiments, OS implementation module 178 calls one or more other components via an underlying API and thus be both an API calling module and an OS implementation module. It should be recognized that OS implementation module 178 can include additional functions, methods, classes, data structures, and/or other features that are not specified through API 176 and are not available to API calling module 174. It should also be recognized that API calling module 174 can be on the same system as OS implementation module 178 or can be located remotely and access OS implementation module 178 using API 176 over a network. In some embodiments, OS implementation module 178, API 176, and/or API-calling module 174 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

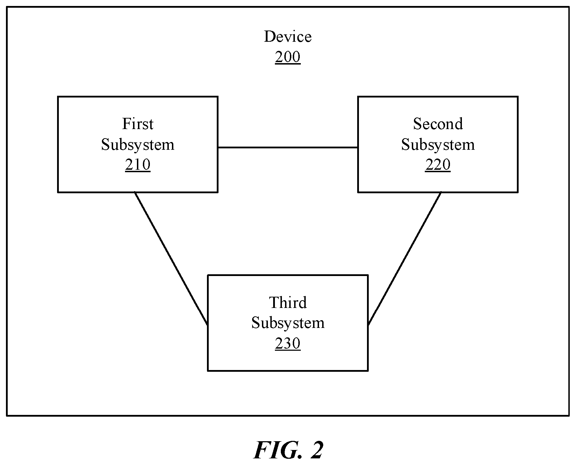

FIG. 2 illustrates a block diagram of device 200 with interconnected subsystems. In the illustrated example, device 200 includes three different subsystems (i.e., first subsystem 210, second subsystem 220, and third subsystem 230) communicating with (e.g., wired or wirelessly) each other, creating a network (e.g., a personal area network, a local area network, a wireless local area network, a metropolitan area network, a wide area network, a storage area network, a virtual private network, an enterprise internal private network, a campus area network, a system area network, and/or a controller area network). An example of a possible computer architecture of a subsystem as included in FIG. 2 is described in FIG. 1A (i.e., compute system 100). Although three subsystems are shown in FIG. 2, device 200 can include more or fewer subsystems.

In some embodiments, some subsystems are not connected to other subsystem (e.g., first subsystem 210 can be connected to second subsystem 220 and third subsystem 230 but second subsystem 220 cannot be connected to third subsystem 230). In some embodiments, some subsystems are connected via one or more wires while other subsystems are wirelessly connected. In some embodiments, messages are set between the first subsystem 210, second subsystem 220, and third subsystem 230, such that when a respective subsystem sends a message the other subsystems receive the message (e.g., via a wire and/or a bus). In some embodiments, one or more subsystems are wirelessly connected to one or more compute systems outside of device 200, such as a server system. In such examples, the subsystem can be configured to communicate wirelessly to the one or more compute systems outside of device 200.

In some embodiments, device 200 includes a housing that fully or partially encloses subsystems 210-230. Examples of device 200 include a home-appliance device (e.g., a refrigerator or an air conditioning system), a robot (e.g., a robotic arm or a robotic vacuum), and a vehicle. In some embodiments, device 200 is configured to navigate (with or without user input) in a physical environment.

In some embodiments, one or more subsystems of device 200 are used to control, manage, and/or receive data from one or more other subsystems of device 200 and/or one or more compute systems remote from device 200. For example, first subsystem 210 and second subsystem 220 can each be a camera that captures images, and third subsystem 230 can use the captured images for decision making. In some embodiments, at least a portion of device 200 functions as a distributed compute system. For example, a task can be split into different portions, where a first portion is executed by first subsystem 210 and a second portion is executed by second subsystem 220.

Attention is now directed to techniques for generating content from multi-modal input, such as a sketch, image, and/or text. Such techniques are described in the context of content generation using a machine learning model conditioned based on a hand drawn sketch. It should be recognized that other methods and/or inputs for conditioning and/or machine learning models can be used with techniques described herein. For example, a conditioner can be used with another neural network using techniques described herein. In addition, techniques optionally complement or replace other techniques for connecting devices.

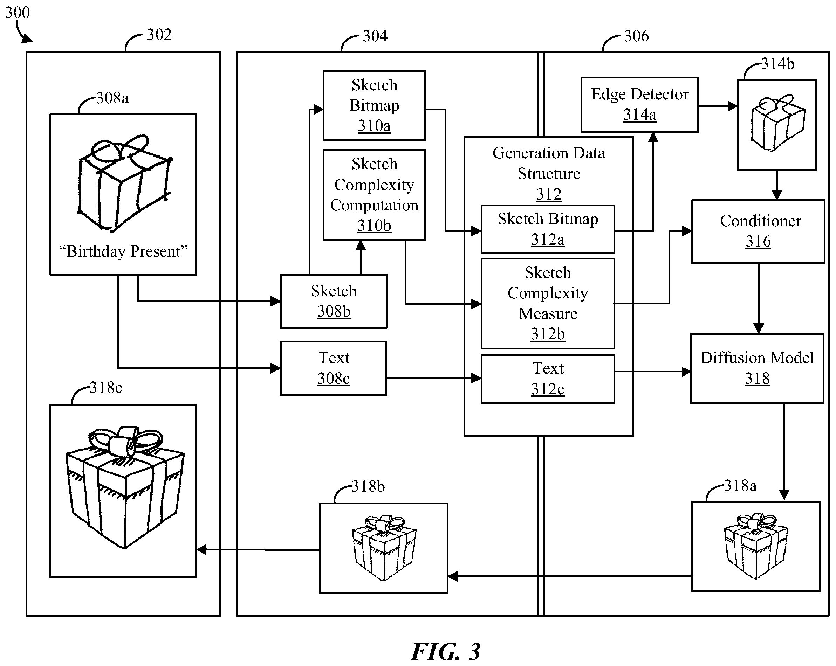

FIG. 3 illustrates an exemplary architecture for generating content from a sketch in accordance with some embodiments. The exemplary architecture in this figure is used to illustrate the processes described below, including the processes in FIGS. 4, 6, 7 and 8. It should be recognized that some components of the exemplary architecture are, optionally, combined, changed, included in different components, and/or omitted.

As illustrated in FIG. 3, architecture 300 includes client process 302, application process 304, and generation process 306. In some embodiments, client process 302 and/or application process 304 is a note-taking application that provides a canvas where a user can draw, handwrite, type text, and/or insert objects such as shapes, images, emojis, and/or videos. In some embodiments, client process 302 and/or application process 304 is an emoji generation application where a user can draw, describe, manipulate and/or generate emojis. In some embodiments, generation process 306 is a process for generating content via a machine learning model pipeline that conditions a diffusion model and/or other type of machine learning model based on user input (e.g., sketch and/or image). In some embodiments, client process 302 and/or application process 304 executes at a first device (e.g., a smart phone, a smart watch, a smart display, a tablet, a laptop, a fitness tracking device, a head-mounted display (HMD) device, a communal device, a media device, a speaker, a television, and/or a personal computing device) that in communication with a display generation component (e.g., a display screen, a projector, and/or a touch-sensitive display) and an input component (e.g., a camera, a depth sensor, a microphone, a hardware input mechanism, a rotatable input mechanism, a heart monitor, a temperature sensor, and/or a touch-sensitive surface). In some embodiments, application process 302 and/or generation process 304 executes at one or more computer systems (e.g., cloud server and/or distributed computing clusters) that communicates with the first device over a network.

In some embodiments, client process 302 and/or application process 304 can use a framework. The framework can include one or more modules for implementing features such as user interface rendering (e.g., user interface component, layout manager, and/or rendering engine), input handling (e.g., event listener and/or input validator), gesture recognizer (e.g., stroke and/or drawing recognizer), data management (e.g., cache and/or data transformer) and/or integration with an operating system and/or hardware of the first device (e.g., accessing file systems and/or sensors).

As illustrated in FIG. 3, client process 302 and/or application process 304 uses generation data structure 312 to pass data to generation process 306. In some embodiments, generation data structure 312 is stored in a binary format that provides a compact and/or efficient representation of large data. In other embodiments, generation data structure 312 is stored in a structured format such as JSON and/or XML that provide easily parsable formats for data exchange and/or storage between processes and/or computer systems.

As illustrated in FIG. 3, client process 302 receives an input (e.g., as illustrated by input 308a). In some embodiments, input 308a includes a sketch and/or text. In some embodiments, client process 302 processes input 308a into a data package (e.g., JSON and/or binary) and sends the data package to application process 304. In some embodiments, the data package includes additional metadata such as device information (e.g., of the first device), authentication and/or account information, and/or user preferences. In some embodiments, before sending input 308a to application process 308, client process 302 compresses, encrypts and/or otherwise transforms input 308a. For example, the text of input 308a can be handwritten and client process 302 can transcribe the handwritten text into a set of one or more words that is then sent to application process 304 instead of the handwritten text.

In some embodiments, the sketch of input 308a, as illustrated by sketch 308b, and/or the text of input 308a, as illustrated by text 308c, is selected using one or more techniques and/or tools such as circling, drawing, and/or selecting a region on a canvas of client process 302. In some embodiments, text 308c is automatically identified from text on the canvas of client process 302 (e.g., either typed or handwritten text). In some embodiments, client process 302 and/or application process 304 separates sketch 308b and text 308c from input 308a.

In some embodiments, sketch 308b is hand drawn content that includes one or more hand drawn strokes (e.g., in SVG file, XML, PDF, vector graphic, sequence of coordinate points, sequence of curve segments, binary, and/or custom file) along with metadata such as direction, speed of drawing, curve and/or pressure of each stroke, among other metadata.

In some embodiments, text 308c includes textual information such as typed text (e.g., from one or more text boxes), handwritten text that is transcribed and/or converted by client process 302 and/or application process 304 into machine-encoded text, and/or metadata from a canvas (e.g., canvas title, content type, and/or user history information). In some embodiments, text 308c is received via user input, such as from a keyboard, on a text prompt user interface element after detecting selection of sketched content and/or an image on a canvas. In some embodiments, text 308c is stored as plain text, rich text (e.g., with formatting and/or styling information), and/or structured data (e.g., JSON and/or XML format). In some embodiments, text 308c includes textual information extracted from a canvas in client process 302 where input 308a was detected.

In some embodiments, an output style and/or mode is an input that is provided along with input 308a or separately, before or after receiving input 308a, such as via a configuration of client process 302 and/or application process 304. In some embodiments, the output style represents a set of constraints that define visual characteristics and/or an artistic style for content generation. In some embodiments, the output style is selected by a user via a configuration and/or control of client process 302 from a set of predefined output styles such as sketch and/or animation, among others. In some embodiments, the output style is a default output style and/or is determined via an analysis of input 308a (e.g., from sketch 308b and/or text 308c). In some embodiments, the output style includes constraints and/or preferences corresponding to composition, layout, and/or content of generated content such as rendering style, resolution, color palette, texture, patterns, lighting, perspective, brush strokes, and/or subject matter, among others. In some embodiments, the mode specifies a type of operation and/or task for content generation to be performed on input 308a. In some embodiments, the mode determines how input such as sketch 308b and/or text 308c is processed and/or transformed from one set of modalities into a target modality for content generation (e.g., sketch to image, drawing over image restyling, and/or text to image). In some embodiments, the mode is selected by a user via a configuration and/or control of client process 302 from a set of predefined modes. In some embodiments, the mode is a default mode and/or is determined via an analysis of a composition of input 308a via client process 302 and/or application process 304.

In some embodiments, application process 304 performs one or more preprocessing steps on sketch 308b, before adding the sketch to generation data structure 312. In some embodiments, the sketch is converted into a bitmap (e.g., as illustrated by sketch bitmap 310a) that represents the sketch using a combination of red, green, blue, and/or alpha (e.g., transparency and/or opacity) components for each pixel. In some embodiments, converting the sketch into sketch bitmap 310a is achieved via one or more methods such as rasterization, direct encoding, and/or stroke rendering among other techniques. For example, if the sketch is provided in a vector graphics format (e.g., SVG, and/or PDF), the sketch can be rasterized and/or sampled at intervals to generate pixel values based on vector path colors and/or alpha values. For another example, if the sketch is provided as a sequence of coordinate points or curve segments, each point or segment can be directly encoded into corresponding pixel values in sketch bitmap 310a. For another example, if the sketch is provided as a series of strokes with metadata (e.g., direction, speed, and/or pressure), each stroke can be rendered onto sketch bitmap 310a using techniques such as brush simulation and/or stroke thickness modulation based on the stroke metadata. In some embodiments, the sketch is provided as a series of strokes that are not converted into a sketch bitmap. In some embodiments, the sketch is provided in one or more separate formats, including sketch bitmap 310a and/or a series of strokes. In some embodiments, anti-aliasing techniques are applied to smooth jagged edges that can appear when rasterizing continuous sketch strokes into discrete pixels. In some embodiments, normalization techniques are applied, where pixel values in the sketch bitmap are scaled to a specific range (e.g., 0 to 1, and/or -1 to 1) to ensure consistency with input expectations and/or increase performance of the machine learning model (e.g., diffusion model 318) of generation process 306. In some embodiments, noise injection techniques are applied by adding controlled noise to the sketch bitmap to help prevent the machine learning model (e.g., diffusion model 318) from overfitting to specific sketch details and/or encourage learning more generalizable features of the sketch. In some embodiments, style transfer preprocessing techniques are employed to the sketch bitmap if the output style is different from an original style of the sketch, to better align with the output style before being provided as input to the machine learning model (e.g., diffusion model 318).

In some embodiments, in conjunction with (e.g., while, before, and/or after) converting sketch 308b into sketch bitmap 310a, a sketch complexity analysis (e.g., as illustrated by sketch complexity computation 310b) is performed to quantify the level of detail and/or complexity in the sketch and/or sketch bitmap 310a. In some embodiments, sketch complexity computation 310b can involve one or more techniques such as stroke count and/or stroke length analysis, stroke curvature and/or stroke complexity analysis, region segmentation, and/or entropy and/or information density analysis among other techniques. For example, sketch complexity computation 310b can include counting the number and/or analyzing the length of strokes in the sketch. In such an example, a higher number of strokes and/or longer stroke lengths can indicate a more complex sketch. For another example, sketch complexity computation 310b can include measuring the curvature and/or complexity of individual strokes. In such an example, a highly curved or intricate stroke can indicate a more complex and/or refined sketch. For another example, sketch complexity computation 310b can include region segmentation that involves dividing the sketch and/or sketch bitmap 310a into distinct regions and analyzing the complexity of each region, while considering factors such as the number of distinct shapes, overlapping regions, and/or nested structures. For another example, sketch complexity computation 310b can include calculating entropy and/or information density of the sketch and/or sketch bitmap 310a. In such an example, a higher entropy and/or information density can indicate a more complex sketch.

Sketch complexity computation 310b outputs sketch complexity measure 312b, which quantifies the level of detail and/or complexity in sketch 308b and/or sketch bitmap 310a (e.g., high complexity, low complexity, and/or medium complexity). In some embodiments, sketch complexity measure 312b includes added fluctuation (e.g., random values and/or predefined values). In some embodiments, the fluctuation allows generation of a diverse set of output images, such as output image 318c. In some embodiments, the fluctuation allows generation of output images that are less aligned with sketch 308b while exhibiting stylistic characteristics. In other embodiments, the fluctuation allows generation of output images that are more closely aligned with sketch 308b. In some embodiments, sketch complexity measure 312b is added to generation data structure 312.

In some embodiments, generation data structure 312 is passed through one or more software layers and/or pipelines (e.g., preprocessing layer, communication layer, and/or resource management layer) (e.g., computer system and/or cloud server) before reaching generation process 306. The one or more software layers can include preprocessing steps such as data formatting, compression, data validation, and/or load balancing to distribute workload across one or more computer systems (e.g., processing nodes) for improved performance and/or scalability. In some embodiments, generation data structure 312 is transmitted over a network to a remote computer system where content generation takes place. In some embodiments, generation data structure 312 acts as a self-contained data package that encapsulates inputs used for the generation process, providing a standardized interface for communication and/or data exchange between the one or more software layers and/or components involved in content generation.

In some embodiments, generation data structure 312 is transmitted to generation process 306 for content generation and/or further processing. Generation process 306 can include one or more components such as software layers (e.g., machine learning model, data queue, and/or processor), data layers (e.g., storage, cache, and/or pipeline), and/or computing resources (e.g., processing node, cloud server, and/or cluster) (e.g., as illustrated by components such as edge detector 314a, conditioner 316, and/or diffusion model 318). In some embodiments, the one or more components of generation process 306 orchestrate an analysis and/or routing of portions of generation data structure 312 to appropriate components (e.g., conditioner 316 and/or diffusion model 318) to generate content, via diffusion model 318, such as output image 318a.

In some embodiments, edge detector 314a extracts edges from sketch bitmap 312a to generate output 314b. In some embodiments, the edge detector applies one or more edge detection techniques (e.g., Canny, Sobel, Laplacian filter, and/or custom algorithm) to analyze sketch bitmap 312a. In some embodiments, the one or more edge detection techniques analyze pixel values and/or pixel gradients to locate sharp changes in intensity that can correspond to object boundaries and/or edges in sketch bitmap 312a. In some embodiments, the one or more edge detection techniques involve one or more processing steps to generate and/or refine output 314b such as Gaussian blur to reduce noise, gradient calculation to determine edge strength and direction, non-maximum suppression to thin the edges, and/or hysteresis thresholding to filter out weak edges. For another example, edge detector 314a can implement one or more processing steps such as convolution with Sobel kernels to compute gradients and/or thresholding to identify edge pixels. For another example, edge detector 314a can implement one or more processing steps such as Laplacian kernel alongside thresholding and/or zero-crossing detection to identify edges in the sketch bitmap. In some embodiments, resulting output from edge detector 314a (e.g., as illustrated by output 314b) can be a binary image where edge pixels are highlighted against a background. In some embodiments, output 314b can be a grayscale image where pixel values represent edge strength. In some embodiments, output 314b can be edge map indicating the intensity and/or gradient magnitude of detected edges in sketch bitmap 312a. In some embodiments, sketch bitmap 312a is provided directly to conditioner 316 without edge detection processing.

In some embodiments, output 314b and/or sketch complexity measure 312b are sent to conditioner 316 for further processing. In some embodiments, conditioner 316 prepares input data (e.g., output 314b and/or sketch complexity measure 312a) for the machine learning model (e.g., diffusion model 318) by applying one or more techniques for optimizing content generation. For example, the one or more techniques can include noise reduction algorithms (e.g., Gaussian smoothing and/or median filtering to enhance the clarity of detected edges). For another example, the one or more techniques can include contrast enhancement techniques to adjust a dynamic range of pixel values in output 314b and/or sketch complexity measure to emphasize edges and/or features. For another example, the one or more techniques can include spatial normalization to ensure consistency in size and/or scale of input data across content (e.g., sketch 308b and/or output 314b). In some embodiments, conditioner 316 processes and/or integrates processed input data to create a conditioning signal for guiding the machine learning model during content generation. The conditioning signal can include features extracted from the input data using techniques such as corner detection, contour detection, Gabor filters, and/or custom algorithms to identify and/or incorporate relevant structural elements from the input data to improve and/or optimize performance of the machine learning model in content generation.

In some embodiments, conditioner 316 uses output 314b to guide content generation by providing structural information about sketch 308b. For example, conditioner 316 can assign higher importance and/or weights to regions near detected edges to ensure that generated content (e.g., output image 318a) preserves key elements and/or composition of the sketch. In some embodiments, the conditioner uses sketch complexity measure 312b to determine a weight and/or influence of the sketch on output image 318a. For example, if sketch complexity measure 312b indicates a highly detailed and/or complex sketch, the conditioner allocates more weight to the sketch-related features to have diffusion model 318 generate an output image that closely follows the sketch. For another example, if sketch complexity measure 312b indicates a simpler sketch, conditioner 316 allocates less weight to the sketch and allows the machine learning model to balance influence of the sketch with other inputs, such as text 312c and/or output style in content generation (e.g., output image 318a).

Output of conditioner 316 is sent to the machine learning model (e.g., diffusion model 318). In some embodiments, the specific format and/or characteristics of the output of conditioner 316 can vary depending on techniques and/or transformations applied by conditioner 316. In some embodiments, output of conditioner 316 can be in the form of a processed image and/or data representation optimized for the machine learning model's operation. For example, output of conditioner 316 can be represented as a series of numerical values encoding one or more attributes of input data (e.g., output 314b and/or sketch complexity measure 312b), such as pixel color, intensity, gradient, and/or structural features. For another example, output of conditioner 316 can be binary data indicating presence or absence of certain features and/or patterns within the input data.

In some embodiments, the machine learning model (e.g., diffusion model 318) receives a set of one or more inputs such as one or more portions of generation data structure 312 (e.g., text 312c, output style, and/or mode) and/or output of conditioner 316. In some embodiments, the machine learning model generates content, such as output image 318a, by iteratively refining and/or transforming data based on the set of one or more inputs. In some embodiments, the machine learning model (e.g., diffusion model 318) uses diffusion techniques to simulate a gradual spread and/or evolution of data to align generated content with the one or more portions of generation data structure 312 and/or output of conditioner 316. In some embodiments, the machine learning model can preprocess the set of one or more inputs to extract and/or transform data and/or features. For example, the machine learning model applies natural language processing techniques such as tokenization and/or embedding among other techniques to text 312c to derive semantic information. For another example, output style is encoded into a style representation vector that captures characteristics of a selected and/or default output style. Similarly, a mode can be converted into a task and/or process specific embedding that encodes requirements and/or constraints associated with a selected and/or default mode.

In some embodiments, the machine learning model (e.g., diffusion model 318) assigns weights to the set of one or more inputs in different iterations of content generation. In some embodiments, the weights are dynamically adjusted to emphasize specific features. In some embodiments, a number and/or specificity of the one or more portions of generation data structure 312 influences a level of creativity and/or coherence in content generation. For example, if the set of one or more inputs is minimal and/or lacks complexity, such as ingesting a simple sketch (e.g., a low complexity measure in sketch complexity measure 312b) and/or absence of a text, the machine learning model can have more freedom and/or creativity in content generation. For another example, if the set of one or more inputs is complex and/or specific (e.g., a high complexity measure in sketch complexity measure 312b and/or highly descriptive text 312c), the machine learning model can generate content that closely reflects provided specifications in the set of one or more inputs without taking a higher level of freedom and/or creativity in the process.

In some embodiments, content generated by the machine learning model (e.g., diffusion model 318) is an image, such as output image 318a. In some embodiments, output image 318a is an image that aligns with specifications and/or constraints provided by a set of one or more inputs (e.g., one or more portions of generation data structure 312 and/or output of conditioner 316). In some embodiments, output image 318a is generated and/or stored in one or more formats (e.g., PNG, JPEG, GIF, UTF-8, and/or custom emoji format) depending on requirements of subsequent processing stages and/or client process 302. After being generated by the machine learning model, output image 318a is sent through one or more software layers before reaching client process 302. In some embodiments, output image 318a undergoes post-processing, transformation and/or format conversion to ensure compatibility and/or optimal performance within each layer of software (e.g., application process 304 and/or client process 302). For example, output image 318a can undergo one or more post-processing steps such as resizing, cropping and/or color adjustment among other post-processing steps, via image processing libraries and/or middleware components, to meet requirements of and/or adapt to application process 304, client process 302 (e.g., as illustrated by output image 318b and/or output image 318c). In some embodiments, as output image 318a travels through the one or more software layers, the output image is referenced using different identifiers to reflect its progression. For example, the same output image is referred to as output image 318a, output image 318b, and/or output image 318c at different stages to indicate its current position within the software stack (e.g., without undergoing any post-processing steps and/or transformation) (e.g., as illustrated in FIG. 3).

In some embodiments, output image 318a is sent from generation process 306 to application process 304 (e.g., as illustrated by output image 318b). In some embodiments, output image 318b is a transformed, encrypted and/or compressed version of output image 318a for optimized and/or secure network transmission. In some embodiments, output image 318b is sent from application process 304 to client process 302 that requested content generation (e.g., as illustrated by output image 318c). In some embodiments, output image 318c is transformed (e.g., decoded, decompressed, and/or resized) and/or converted to a format that is supported by client application 302. In some embodiments, output image 318c is displayed and/or rendered within a user interface of client process 302. In some embodiments, client process 302 can apply one or more client-side modifications and/or enhancements to the output image such as applying visual effects, overlaying text and/or graphical elements.

FIG. 4 is a flow diagram illustrating a method (e.g., method 400) for generating content using edges of content in accordance with some embodiments. Some operations in method 400 are, optionally, combined, the orders of some operations are, optionally, changed, and some operations are, optionally, omitted.

As described below, method 400 provides an intuitive way for generating content using edges of content. Method 400 reduces the cognitive burden on a user, thereby creating a more efficient human-machine interface. For battery-operated computing devices, enabling a user to interact with such devices faster and more efficiently conserves power and increases the time between battery charges.

In some embodiments, method 400 is performed at a device (e.g., at a system process (e.g., 304 and/or 306) and/or an application (e.g., 302 and/or 304) of the device). In some embodiments, the device is a computer system, a watch, a phone, a tablet, a fitness tracking device, a processor, a head-mounted display (HMD) device, a communal device, a media device, a speaker, a television, an electronic device, and/or a personal computing device. In some embodiments, the system process is a process of an operating system of the device. In some embodiments, the application is a user application of the device, such as an application that was installed on the device.

The device receives (402) (e.g., from and/or via an application of the device) first content (e.g., an image, a video, a sketch, and/or a set of one or more words) (e.g., 308a, 308b, 310a, 312a, 314b, 508a, 508b, 508c, 510c, 512a, 512b,512d, 514b, and/or result of 516). In some embodiments, the first content is received via a framework (e.g., a software framework) used by the application of the device.

The device receives (404) a first set of one or more words (e.g., a text prompt) (e.g., 308a, 308c, 312c, 508a, 508d, and/or 512e) corresponding to the first content. In some embodiments, the first set of one or more words are received with the first content.

The device conditions (406) (and/or trains) (e.g., 316) a diffusion model (e.g., a conditional-based diffusion model) (e.g., used by an AI process or a generative AI process) (e.g., 318) based on a set of one or more edges (e.g., 314b and/or 514b) of the first content. In some embodiments, conditioning the diffusion model includes providing, as an input, a value for a set of one or more parameters of the diffusion model, wherein the value is determined based on the set of one or more edges. In some embodiments, the diffusion model is conditioned based on the set of one or more edges of the first content in response to receiving the first content. In some embodiments, the device and/or the system process determines the set of one or more edges of the first content. In some embodiments, the device and/or the system process receives the set of one or more edges of the first content.

After (and/or in response to) conditioning the diffusion model based on the set of one or more edges, the device generates (408) (e.g., 318), using the diffusion model, second content (e.g., the same as or different from the first content) (e.g., automatically-generated visual content and/or generative visual content) (e.g., 318a and/or 518a) based on the first set of one or more words. In some embodiments, the diffusion model does not use the first content and/or the set of one or more edges to generate the second content (e.g., the diffusion model is conditioned based on the set of one or more edges but the diffusion model does not receive the first content and/or the set of one or more edges as an input to the diffusion model). In some embodiments, the diffusion model receives the first set of one or more words as input to the diffusion model.

In some embodiments, the first set of one or more words is a transcription (and/or a transcript) of handwritten text (e.g., in a document, such as a tangible and/or electronic record). In some embodiments, the document includes the first content. In some embodiments, the document is a word processing document, a note, a spreadsheet, and/or a file. In some embodiments, the device detects, via one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) that is in communication with device, a handwriting input corresponding to the handwritten text.

In some embodiments, the first set of one or more words is typed text (e.g., in a document, such as a tangible and/or electronic record). In some embodiments, the document includes the first content. In some embodiments, the document is a word processing document, a note, a spreadsheet, and/or a file. In some embodiments, the device detects, via one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) that is in communication with device, a set of one or more inputs corresponding to the first set of one or more words. In some embodiments, each input of the set of one or more inputs corresponds to a character.

In some embodiments, the first set of one or more words is computer generated (e.g., from and/or based on content in a document, such as a tangible and/or electronic record) (e.g., by extracting contextual information, such as title, preceding paragraph (e.g., to the first content), a following paragraph (e.g., to the first content), handwriting, and/or a text box (e.g., nearby the first content)). In some embodiments, the document includes the first content. In some embodiments, the document is a word processing document, a note, a spreadsheet, and/or a file. In some embodiments, the first set of one or more words is determined based on content different from the first set of one or more words. In some embodiments, the first set of one or more words is identified within content that includes one or more words different from the first set of one or more words. In some embodiments, the device determines the first set of one or more words from content in the document.

In some embodiments, the first content is a rasterized image of a handwritten sketch (e.g., the handwritten sketch is converted into a bitmap image). In some embodiments, the device receives the handwritten sketch. In some embodiments, the device converts the handwritten text to the rasterized image.

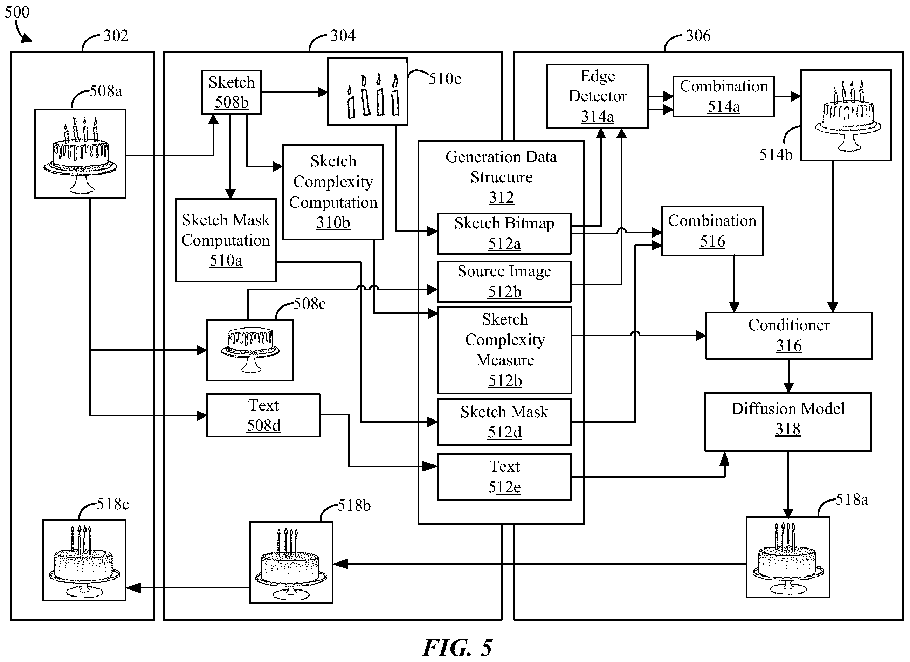

In some embodiments, the diffusion model is conditioned based on a complexity (e.g., as described above with respect to 310b in FIG. 3 and/or 510b in FIG. 5) (e.g., 310b, 312b, and/or 512b) of the handwritten sketch. In some embodiments, the device receives the handwritten sketch. In some embodiments, the device determines the complexity of the handwritten sketch using the handwritten sketch. In some embodiments, the diffusion model does not receive the complexity of the handwritten sketch as input to the diffusion model.

In some embodiments, in conjunction with (e.g., before, while, and/or after) receiving the first content, the device receives a set of information corresponding to one or more requirements (e.g., an output style and/or mode) of content generated using the diffusion model, wherein the second content is generated using the diffusion model that is configured based on the set of information. In some embodiments, the output style corresponds to a style for content that is generated using the diffusion model. Examples of the output style include sketch, photograph, stick figure, paint, and/or monochrome. For example, when the output style is a sketch, the second content is generated in a sketch style rather than a photograph style. In some embodiments, the mode corresponds to a type of content that is generated using the diffusion model. Examples of the mode include image, video, and/or animation. For example, when the mode is image, the second content is an image. In some embodiments, the diffusion model receives the set of information as input to the diffusion model.

In some embodiments, conditioning the diffusion model is performed via a neural network. In some embodiments, an output of the neural network is a set of one or more values. In some embodiments, the output is provided to the diffusion model to change how the diffusion model operates (e.g., to change an appearance of content output by the diffusion model).

In some embodiments, the second content is an image.

In some embodiments, the second content is a video (and/or an animation).

In some embodiments, the device receives (e.g., from and/or via an application of the device) third content, wherein the third content (e.g., an image, a video, a sketch, and/or a set of one or more words) is the same as the first content. In some embodiments, the third content is received via a framework (e.g., a software framework) used by the application of the device. In some embodiments, the device receives a second set of one or more words different from the first set of one or more words. In some embodiments, the second set of one or more words are received with the third content. In some embodiments, the device conditions (and/or trains) the diffusion model based on a set of one or more edges of the third content. In some embodiments, after (and/or in response to) conditioning the diffusion model based on the set of one or more edges of the third content, the device generates, using the diffusion model, fourth content (e.g., the same as or different from the third content) based on the second set of one or more words, wherein the fourth content is different from the second content (and/or the first content). In some embodiments, the diffusion model does not use the third content and/or the set of one or more edges of the third content to generate the fourth content (e.g., the diffusion model is conditioned based on the set of one or more edges of the third content but the diffusion model does not receive the third content and/or the set of one or more edges of the third content as an input to the diffusion model). In some embodiments, the diffusion model receives the second set of one or more words as input to the diffusion model.

In some embodiments, the device receives (e.g., from and/or via an application of the device) third content, wherein the third content (e.g., an image, a video, a sketch, and/or a set of one or more words) is the same as the first content. In some embodiments, the third content is received via a framework (e.g., a software framework) used by the application of the device. In some embodiments, the device receives a second set of one or more words different from the first set of one or more words. In some embodiments, the second set of one or more words are received with the third content. In some embodiments, the device conditions (and/or trains) the diffusion model based on a set of one or more edges of the third content. In some embodiments, after (and/or in response to) conditioning the diffusion model based on the set of one or more edges of the third content, the device generates, using the diffusion model, fourth content (e.g., the same as or different from the third content) based on the second set of one or more words, wherein the fourth content is the same as the second content. In some embodiments, the diffusion model does not use the third content and/or the set of one or more edges of the third content to generate the fourth content (e.g., the diffusion model is conditioned based on the set of one or more edges of the third content but the diffusion model does not receive the third content and/or the set of one or more edges of the third content as an input to the diffusion model). In some embodiments, the diffusion model receives the second set of one or more words as input to the diffusion model.

In some embodiments, the device receives (e.g., from and/or via an application of the device) fifth content, wherein the fifth content (e.g., an image, a video, a sketch, and/or a set of one or more words) is different from the first content. In some embodiments, the fifth content is received via a framework (e.g., a software framework) used by the application of the device. In some embodiments, the device receives a third set of one or more words that are the same as the first set of one or more words. In some embodiments, the second set of one or more words are received with the fifth content. In some embodiments, the device conditions (and/or trains) the diffusion model based on a set of one or more edges of the fifth content. In some embodiments, after (and/or in response to) conditioning the diffusion model based on the set of one or more edges of the fifth content, the device generates, using the diffusion model, sixth content based on the third set of one or more words, wherein the fifth content is different from the second content. In some embodiments, the diffusion model does not use the fifth content and/or the set of one or more edges of the fifth content to generate the sixth content (e.g., the diffusion model is conditioned based on the set of one or more edges of the fifth content but the diffusion model does not receive the fifth content and/or the set of one or more edges of the fifth content as an input to the diffusion model). In some embodiments, the diffusion model receives the third set of one or more words as input to the diffusion model.

In some embodiments, the device receives (e.g., from and/or via an application of the device) fifth content, wherein the fifth content (e.g., an image, a video, a sketch, and/or a set of one or more words) is different from the first content. In some embodiments, the fifth content is received via a framework (e.g., a software framework) used by the application of the device. In some embodiments, the device receives a third set of one or more words that are the same as the first set of one or more words. In some embodiments, the second set of one or more words are received with the fifth content. In some embodiments, the device conditions (and/or trains) the diffusion model based on a set of one or more edges of the fifth content. In some embodiments, after (and/or in response to) conditioning the diffusion model based on the set of one or more edges of the fifth content, the device generates, using the diffusion model, sixth content based on the third set of one or more words, wherein the fifth content is the same as the second content. In some embodiments, the diffusion model does not use the fifth content and/or the set of one or more edges of the fifth content to generate the sixth content (e.g., the diffusion model is conditioned based on the set of one or more edges of the fifth content but the diffusion model does not receive the fifth content and/or the set of one or more edges of the fifth content as an input to the diffusion model). In some embodiments, the diffusion model receives the third set of one or more words as input to the diffusion model.

In some embodiments, before conditioning the diffusion model based on the first content and the set of one or more edges of the first content, the device identifies (e.g., 314a) the set of one or more edges of the first content.

In some embodiments, before conditioning the diffusion model based on the first content and the set of one or more edges of the first content, the device receives (e.g., from an application, such as the application and the first content was received from) the set of one or more edges of the first content.

Note that details of the processes described above with respect to method 400 (e.g., FIG. 4) are also applicable in an analogous manner to other methods described herein. For example, method 600 optionally includes one or more of the characteristics of the various methods described above with reference to method 400. For example, the first content of method 600 can be the first content of method 400. For brevity, these details are not repeated herein.

FIG. 5 illustrates exemplary architecture 500 for generating content from a sketch and an image in accordance with some examples. As described above with respect to FIG. 3, architecture 500 includes client process 302, application process 304, and generation process 306. In some embodiments, client process 302, application process 304, and/or generating process 306 are executed on the same device (e.g., the first device described above with respect to FIG. 3). In some embodiments, processes (e.g., 502, 504, 506) in architecture 500 can trigger different subprocesses, tasks, methods, and/or techniques compared to processes (e.g., 302, 304, 306) in architecture 300 based on a structure and/or composition of input (e.g., 508a). In some embodiments, processes (e.g., 502, 504, 506) in architecture 500 can trigger subprocesses, tasks, methods, and/or techniques that were described above in processes (e.g., 302, 304, 306) in architecture 300.

As illustrated in FIG. 5, client process 302 receives an input (e.g., as illustrated by input 508a). In some embodiments, input 508a is detected using the same techniques described with respect to input 308a in FIG. 3. In some embodiments, input 508a includes an image with an overlayed sketch and/or text. In some embodiments, client process 302 adds one or more portions of input 508a into a data package (e.g., as described above with respect to input 308a in FIG.3) and sends the data package to application process 304.

In some embodiments, input 508a includes a sketch (e.g., as illustrated by sketch 508b) that a user has drawn on top of a source image (e.g., as illustrated by source image 508c) (e.g., and as described above with respect to sketch 308b) via client process 302.

In some embodiments, application process 304 extracts sketch 508b from image 508c in preparation for further steps in conditioning the machine learning model (e.g., diffusion model 318). In some embodiments, sketch 508b and image 508c are maintained in separate data structures to facilitate extraction of sketch 508b from image 508c. For example, source image 508c can be represented as a bitmap image while sketch 508b can be stored as a vector graphics format (e.g., SVG), a sequence of curve segments, binary, and/or a sequence of coordinates.

In some embodiments, text 508d includes textual information (e.g., as described above with respect to text 308c) extracted from a canvas via client process 302 where input 508a was detected. In some embodiments, text 308c includes text received via user input, such as from a keyboard, on a text prompt user interface element after detecting selection of sketched content and/or an image on a canvas. In some embodiments, an output style and/or a mode is an input that is provided along with input 508a or separately, before or after receiving input 508a, such as via a configuration and/or control of client process 302 and/or application process 304. In some embodiments, the output style and/or the mode represent the same output style and/or mode described above with respect to FIG. 3.

In some embodiments, application process 304 performs one or more processing steps on sketch 508b. In some embodiments, sketch mask computation 510a is performed on sketch 508b to generate sketch mask 512d. In some embodiments, sketch mask 512d is a binary mask that separates the sketch (e.g., representing candles) from the source image (e.g., representing a birthday cake). In some embodiments, sketch mask computation 510a uses one or more techniques to identify pixels belonging to the sketch to create a binary mask. For example, thresholding techniques can be applied to convert the sketch into a binary image based on an intensity threshold (e.g., pixels with intensities above the threshold are considered part of the sketch, while pixels below the threshold are considered to be part of a background). In some embodiments, edge detection techniques (e.g., Sobel and/or Canny edge detection) are used to identify contours of the sketch to create a binary mask based on detected edges. In some embodiments, the one or more techniques can include region growing and/or clustering algorithms to segment the sketch into distinct regions, and/or gradient-based methods to assign levels of representation of different parts of the sketch that result in a grayscale mask. In some embodiments, the sketch is provided as a series of strokes that are not converted into a sketch bitmap.

In some embodiments, application process 304 performs sketch complexity computation 310b on sketch 508b to generate sketch complexity measure 512c, that quantifies the level of complexity and/or detail in sketch 508b, that is similar to the process described in FIG. 3 (e.g., sketch complexity computation 310b and sketch complexity measure 312b). In some embodiments, sketch complexity computation 310b involves one or more techniques such as stroke count and/or stroke length analysis, stroke curvature and/or stroke complexity analysis, region segmentation, and/or entropy and/or information density analysis among other techniques detailed above with respect to FIG. 3.

In some embodiments, in addition to sketch mask computation 510a and/or sketch complexity computation 310b, sketch 508b is converted into a sketch bitmap (e.g., as illustrated by sketch bitmap 510c), in a process that is similar to the process described in FIG. 3 (e.g., sketch bitmap 312a). The conversion of sketch 508b into sketch bitmap 510c can be achieved using techniques such as rasterization, direct encoding, and/or stroke rendering among other techniques as mentioned above with respect to FIG. 3.

In some embodiments, generation data structure 312 acts as a self-contained data package that encapsulates one or more inputs for generation process 306 and/or provides a standardized interface for communication and/or data exchange between one or more software layers and/or components involved in content generation. Similar to generation data structure 312 in FIG. 3, generation data structure 312 in FIG. 5 can be represented in one or more formats (e.g., binary, JSON, and/or XML) and can be passed through the one or more software layers and/or processes (e.g., for data formatting, compression, validation, and/or load balancing) before reaching generation process 306. The one or more software layers and/or processes are analogous to those described for generation data structure 312 in FIG. 3.

In some embodiments, after completion of one or more processing steps on input 508a as described above, sketch complexity measure 512c, sketch mask 512d, and/or sketch bitmap 512a are added to generation data structure 312 along with other pieces of data extracted and/or generated from input 508a, such as text 512e, image 512b, the output style, and/or the mode.

In some embodiments, edge detector 314a ingests two inputs from generation data structure 312 via generation process 306: sketch bitmap 512a and source image 512b. In some embodiments, edge detector 314a extracts edges from both sketch bitmap 512a and source image 512b. In some embodiments, edge detector 314a applies one or more edge detection techniques as detailed above with respect to edge detector 314a in FIG. 3. In some embodiments, edge detector 314a produces an output for sketch bitmap 512a and an output for source image 512b. In some embodiments, the output for sketch bitmap 512a and/or the output for source image 512b is an edge map, a binary image, and/or a grayscale image among other formats described above with respect to output 314b in FIG. 3. In some embodiments, sketch bitmap 512a is provided directly to conditioner 316 without edge detection processing.

In some embodiments, output for sketch bitmap 512a and output for source image 512b are then combined using combination operation 514b. In some embodiments, combination operation 514b merges data from the output for sketch bitmap 512a and the output for source image 512b to create a combined output of the sketch with the source image. In some embodiments, combination operation 514b can be performed using one or more techniques such as bitwise AND, bitwise OR, masking, additive blending, and/or pixel-wise maximum among other techniques to generate combined output 514c. The specific techniques used in combination operation 514b can depend on the format of the outputs produced by edge detector 314a. For example, if the outputs are binary images or edge maps, combination operation 514b can be performed using bitwise operations such as bitwise AND and/or bitwise OR. For another example, if the outputs are grayscale images, combination operation 514b can use techniques such as additive blending and/or pixel-wise maximum to generate combined output 514c. In some embodiments, combined output 514c is a binary image including white pixels (e.g., with values of 1) representing the combined sketch and source image outlines, and black pixels (e.g., with values of 0) representing a background.

Separately, generation process 306 combines sketch bitmap 512a with sketch mask 512d using combination operation 516. In some embodiments, sketch bitmap 512a is in RGBA format and contains the sketch (e.g., candles) along with pixel color and/or transparency information. In some embodiments, sketch mask 512d is a binary image where white pixels (e.g., with values 1) represent the sketch and black pixels (e.g., with values of 0) represent a background. In some embodiments, combination operation 516 applies the sketch mask to the sketch bitmap to isolate the sketch from the background. In some embodiments, the specific techniques used in combination operation 516 depend on requirements around output format, level of detail, and/or compatibility with subsequent processing such as ingestion by conditioner 316.

In some embodiments, conditioner 316 receives one or more inputs including combined output 514c that represents merged sketch 508b with source image 508c, and a masked sketch output from combination operation 516 that represents only the sketch. Additionally, conditioner 316 receives sketch complexity measure 512c that, similarly to sketch complexity measure 312b in FIG. 3, determines and/or adjusts a weight and/or influence of sketch 508b on output image 518a. In some embodiments, conditioner 316 processes and/or integrates the one or more inputs to create a conditioning signal for guiding the machine learning model (e.g., diffusion model 318) during content generation, as described for conditioner 316 in FIG. 3. In some embodiments, conditioner 316 processes inputs separately in preparation for ingestion by the machine learning model. In some embodiments, having separate inputs for combined data of the sketch and the source image in combined output 514c, and isolated sketch in output of combination operation 516 allows the conditioner to apply different conditioning techniques to each of the inputs, and/or enables the conditioner and/or the machine learning model to assign different weights and/or importance to each input in content generation that allows for a more precise and/or controlled integration of sketch 508b (e.g., candles) with image 508c (e.g., birthday cake) in output image 518a. For example, if the sketch complexity measure indicates a complex and/or detailed sketch, conditioner 316 can emphasize sketch 508b by assigning a higher weight to the masked sketch output from combination operation 516 to condition the machine learning model on generating content that closely follows the sketch, even in the presence of the source image. For another example, if the sketch complexity measure indicates a less complex and/or simpler sketch, the conditioner can assign a higher weight to combined output 514c (e.g., birthday cake image with sketched candles) to condition the machine learning model on generating content that prioritizes the source image while incorporating the sketch as a secondary feature.

In some embodiments, output of conditioner 316 is sent to the machine learning model (e.g., diffusion model 318). In some embodiments, the machine learning model receives a set of one or more inputs such as one or more portions of generation data structure 312 (e.g., text 512e, an output style, and/or a mode) in addition to output of conditioner 316. In some embodiments, the machine learning model preprocesses the set of one or more inputs, dynamically adjusts feature weights, and/or adjusts a level of creativity and/or coherence in content generation. In some embodiments, the machine learning model (e.g., diffusion model 318) uses iterative refinement and/or diffusion techniques to generate output image 518a by progressively incorporating the sketch, the source image, text, and/or other constraints.

In some embodiments, output image 518a undergoes post-processing, transformation, and/or format conversion as the output image passes through one or more software layers, similar to the process described in FIG. 3 (e.g., via output image 318a, output image 318b, and output image 318c) and as illustrated in architecture 500 with output image 518a in generation process 306, output image 518b in application process 304, and/or output image 518c in client process 302. In some embodiments, output image 518c is displayed and/or rendered within a user interface of client process 302, similar to display embodiments in client process 302 described in FIG. 3.

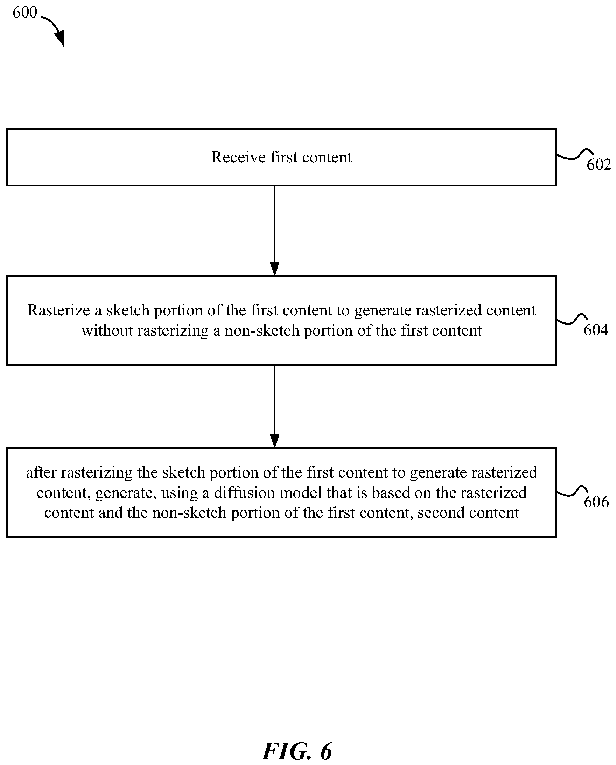

FIG. 6 is a flow diagram illustrating a method (e.g., method 600) for generating content by rasterizing content in accordance with some embodiments. Some operations in method 600 are, optionally, combined, the orders of some operations are, optionally, changed, and some operations are, optionally, omitted.

As described below, method 600 provides an intuitive way for generating content by rasterizing content. Method 600 reduces the cognitive burden on a user, thereby creating a more efficient human-machine interface. For battery-operated computing devices, enabling a user to interact with such devices faster and more efficiently conserves power and increases the time between battery charges.

In some embodiments, method 600 is performed at a device (e.g., at a system process (e.g., 304 and/or 306) and/or an application (e.g., 302 and/or 304) of the device). In some embodiments, the device is a computer system, a watch, a phone, a tablet, a fitness tracking device, a processor, a head-mounted display (HMD) device, a communal device, a media device, a speaker, a television, an electronic device, and/or a personal computing device. In some embodiments, the system process is a process of an operating system of the device. In some embodiments, the application is a user application of the device, such as an application that was installed on the device.

The device receives (602) first content (e.g., an image, a video, a sketch, and/or a set of one or more words) (e.g., 508a). In some embodiments, the first content is received via a framework (e.g., a software framework) used by an application of the device. In some embodiments, the first content includes a handwritten sketch and rasterized content separate from the handwritten sketch. In some embodiments, the first content includes a handwritten sketch and an image, such as a red-green-blue image. In some embodiments, the first content includes content that was pasted into a document and content that was drawn and/or otherwise added to the document based on detecting input movement.

The device rasterizes (604) a sketch portion (e.g., 508b) of the first content to generate rasterized content (e.g., 510c) without rasterizing a non-sketch portion (e.g., 508c) of the first content. In some embodiments, before rasterizing the sketch portion of the first content, the device separates the sketch portion of the first content from the non-sketch portion of the first content. In some embodiments, the sketch portion of the first content is on top of and/or overlaid on the non-sketch portion of the first content. In some embodiments, the non-sketch portion of the first content is rasterized content. In some embodiments, the sketch portion is rasterized in response to receiving the first content.

After (and/or in response to) rasterizing the sketch portion of the first content to generate rasterized content, the device generates (606) (e.g., 318), using a diffusion model (e.g., a conditional-based diffusion model) (e.g., used by an AI process or a generative AI process) that is based on the rasterized content and the non-sketch portion of the first content, second content (e.g., the same as or different from the first content) (e.g., automatically-generated visual content and/or generative visual content) (e.g., 518a, 518b, and/or 518c). In some embodiments, the diffusion model is conditioned on the rasterized content and the non-sketch portion of the first content while the diffusion model generates the second content based on a set of one or more words. In some embodiments, the diffusion model does not use the rasterized content and/or the non-sketch portion of the first content to generate the second content (e.g., the diffusion model is conditioned based on the rasterized content and/or the non-sketch portion of the first content but the diffusion model does not receive the rasterized content and/or the non-sketch portion of the first content as an input to the diffusion model).

In some embodiments, the diffusion model is conditioned (e.g., trained and/or configured) (e.g., 316) based on the rasterized content and the non-sketch portion of the first content. In some embodiments, the second content is generated, using the diffusion model, based on a set of one or more words (e.g., a text prompt) (e.g., 508d and/or 512e) corresponding to the first content. In some embodiments, the diffusion model does not use the rasterized content and the non-sketch portion of the first content to generate the fourth content (e.g., the diffusion model is conditioned based on the rasterized content and the non-sketch portion of the first content but the diffusion model does not receive the rasterized content and the non-sketch portion of the first content as an input to the diffusion model). In some embodiments, the diffusion model receives the set of one or more words as input to the diffusion model.

In some embodiments, the set of one or more words is computer generated (e.g., from and/or based on content in a document, such as a tangible and/or electronic record) (e.g., by extracting contextual information, such as title, preceding paragraph (e.g., to the first content), a following paragraph (e.g., to the first content), handwriting, and/or a text box (e.g., nearby the first content)). In some embodiments, the document includes the first content. In some embodiments, the document is a word processing document, a note, a spreadsheet, and/or a file. In some embodiments, the set of one or more words is determined based on content different from the set of one or more words. In some embodiments, the set of one or more words is identified within content that includes one or more words different from the set of one or more words. In some embodiments, the device determines the set of one or more words from content in the document.

In some embodiments, the set of one or more words includes a summary (e.g., a summarization and/or a description) of the first content (e.g., the set of one or more words describe the first content).

In some embodiments, the diffusion model is conditioned based on a complexity (e.g., as described above with respect to 310b in FIG. 3 and/or 510b in FIG. 5) (e.g., 510b and/or 512b) of the sketch portion of the first content (e.g., and not conditioned based on a complexity of the non-sketch portion of the first content). In some embodiments, the device determines the complexity of the sketch portion of the first content using the sketch portion of the first content. In some embodiments, the diffusion model does not receive the complexity of the sketch portion of the first content as input to the diffusion model. In some embodiments, the diffusion model conditioned based on a complexity of the first content (e.g., the sketch portion and/or the non-sketch portion of the first content).

In some embodiments, the diffusion model is conditioned based on a set of one or more edges (e.g., output of 314a) of the rasterized content and a set of one or more edges (e.g., output of 314a) of the non-sketch portion of the first content (e.g., a set of one or more edges (e.g., 514b) of a combination of the rasterized content and the non-sketch portion of the first content). In some embodiments, the diffusion model is conditioned based on a set of one or more edges of the sketch portion of the first content combined with a set of one or more edges of the non-sketch portion of the first content. In some embodiments, the diffusion model is conditioned based on a set of one or more edges of the sketch portion of the first content. In some embodiments, the diffusion model is conditioned based on a set of one or more edges of the non-sketch portion of the first content. In some embodiments, the diffusion model is conditioned based on a set of one or more edges of the first content.

In some embodiments, the diffusion model is conditioned based on the rasterized content and a preprocessed representation (e.g., output of 314a, 512b, and/or an output of 516) of the non-sketch portion of the first content. In some embodiments, the preprocessed representation is different from the non-sketch portion of the first content. In some embodiments, the preprocessed representation of the non-sketch portion of the first content is a blurred representation of the non-sketch portion of the first content (e.g., the non-sketch portion of the first content with a blur effect applied to the non-sketch portion of the first content), a cropped representation of the non-sketch portion of the first content (e.g., the non-sketch portion of the first content with a first amount of the non-sketch portion of the first content removed), and/or a changed color representation of the non-sketch portion of the first content (e.g., the non-sketch portion of the first content with a first set of one or more colors removed from the non-sketch portion of the first content).

In some embodiments, the preprocessed representation of the non-sketch portion of the first content is generated by applying a blur to the non-sketch portion of the first content (e.g., to remove at least a portion of color information from the non-sketch portion of the first content).

In some embodiments, the diffusion model is conditioned by a neural network (e.g., 316) using a set of one or more edges of the rasterized content and a set of one or more edges of the non-sketch portion of the first content.

In some embodiments, the diffusion model is conditioned based on a complexity (e.g., as described above with respect to 310b in FIG. 3 and/or 510b in FIG. 5) (e.g., 310b and/or 512b) of the sketch portion of the first content. In some embodiments, the device determines the complexity of the sketch portion of the first content using the sketch portion of the first content. In some embodiments, the diffusion model does not receive the complexity of the sketch portion of the first content as input to the diffusion model.

In some embodiments, in conjunction with (e.g., before, while, and/or after) receiving the first content, the device receives a set of information corresponding to one or more requirements (e.g., an output style and/or mode) of content generated using the diffusion model, wherein the second content is generated using the diffusion model that is configured based on the set of information. In some embodiments, the output style corresponds to a style for content that is generated using the diffusion model. Examples of the output style include sketch, photograph, stick figure, paint, and/or monochrome. For example, when the output style is a sketch, the second content is generated in a sketch style rather than a photograph style. In some embodiments, the mode corresponds to a type of content that is generated using the diffusion model. Examples of the mode include image, video, and/or animation. For example, when the mode is image, the second content is an image. In some embodiments, the diffusion model receives the set of information as input to the diffusion model.

In some embodiments, the second content is an image.

In some embodiments, the second content is a video (and/or an animation).

In some embodiments, the rasterized content is first rasterized content. In some embodiments, the device receives third content (e.g., an image, a video, a sketch, and/or a set of one or more words). In some embodiments, the third content is received via a framework (e.g., a software framework) used by an application of the device. In some embodiments, the third content includes a handwritten sketch and rasterized content separate from the handwritten sketch. In some embodiments, the third content includes a handwritten sketch and an image, such as a red-green-blue image. In some embodiments, the third content includes content that was pasted into a document and content that was drawn and/or otherwise added to the document based on detecting input movement. In some embodiments, the device rasterizes a sketch portion of the third content to generate second rasterized content without rasterizing a non-sketch portion of the third content, wherein the second rasterized content is the same as the first rasterized content, and wherein the non-sketch portion of the third content is different from the non-sketch portion of the first content. In some embodiments, before rasterizing the sketch portion of the third content, the device separates the sketch portion of the third content from the non-sketch portion of the third content. In some embodiments, the sketch portion of the third content is on top of and/or overlaid on the non-sketch portion of the third content. In some embodiments, the non-sketch portion of the third content is rasterized content. In some embodiments, the sketch portion is rasterized in response to receiving the third content. In some embodiments, the sketch portion of the third content is the same as the sketch portion of the first content. In some embodiments, after (and/or in response to) rasterizing the sketch portion of the third content to generate the second rasterized content, the device generates, using the diffusion model that is based on the second rasterized content and the non-sketch portion of the third content, fourth content (e.g., the same as or different from the third content). In some embodiments, the diffusion model is conditioned on the second rasterized content and the non-sketch portion of the third content while the diffusion model generates the fourth content based on a set of one or more words. In some embodiments, the diffusion model does not use the second rasterized content and/or the non-sketch portion of the third content to generate the fourth content (e.g., the diffusion model is conditioned based on the second rasterized content and/or the non-sketch portion of the third content but the diffusion model does not receive the second rasterized content and/or the non-sketch portion of the third content as an input to the diffusion model).

In some embodiments, the rasterized content is first rasterized content. In some embodiments, the device receives third content (e.g., an image, a video, a sketch, and/or a set of one or more words). In some embodiments, the third content is received via a framework (e.g., a software framework) used by an application of the device. In some embodiments, the third content includes a handwritten sketch and rasterized content separate from the handwritten sketch. In some embodiments, the third content includes a handwritten sketch and an image, such as a red-green-blue image. In some embodiments, the third content includes content that was pasted into a document and content that was drawn and/or otherwise added to the document based on detecting input movement. In some embodiments, the device rasterizes a sketch portion of the third content to generate second rasterized content without rasterizing a non-sketch portion of the third content, wherein the second rasterized content is the same as the first rasterized content, and wherein the non-sketch portion of the third content is the different from the non-sketch portion of the first content. In some embodiments, before rasterizing the sketch portion of the third content, the device separates the sketch portion of the third content from the non-sketch portion of the third content. In some embodiments, the sketch portion of the third content is on top of and/or overlaid on the non-sketch portion of the third content. In some embodiments, the non-sketch portion of the third content is rasterized content. In some embodiments, the sketch portion is rasterized in response to receiving the third content. In some embodiments, the sketch portion of the third content is the same as the sketch portion of the first content. In some embodiments, after (and/or in response to) rasterizing the sketch portion of the third content to generate the second rasterized content, the device generates, using the diffusion model that is based on the second rasterized content and the non-sketch portion of the third content, fourth content (e.g., the same as or different from the third content). In some embodiments, the diffusion model is conditioned on the second rasterized content and the non-sketch portion of the third content while the diffusion model generates the fourth content based on a set of one or more words. In some embodiments, the diffusion model does not use the second rasterized content and/or the non-sketch portion of the third content to generate the fourth content (e.g., the diffusion model is conditioned based on the second rasterized content and/or the non-sketch portion of the third content but the diffusion model does not receive the second rasterized content and/or the non-sketch portion of the third content as an input to the diffusion model).

In some embodiments, the rasterized content is first rasterized content. In some embodiments, the device receives fifth content (e.g., an image, a video, a sketch, and/or a set of one or more words). In some embodiments, the fifth content is received via a framework (e.g., a software framework) used by an application of the device. In some embodiments, the fifth content includes a handwritten sketch and rasterized content separate from the handwritten sketch. In some embodiments, the fifth content includes a handwritten sketch and an image, such as a red-green-blue image. In some embodiments, the fifth content includes content that was pasted into a document and content that was drawn and/or otherwise added to the document based on detecting input movement. In some embodiments, the device rasterizes a sketch portion of the fifth content to generate third rasterized content without rasterizing a non-sketch portion of the fifth content, wherein the third rasterized content is different from the first rasterized content, and wherein the non-sketch portion of the fifth content is the same as the non-sketch portion of the first content. In some embodiments, before rasterizing the sketch portion of the fifth content, the device separates the sketch portion of the fifth content from the non-sketch portion of the fifth content. In some embodiments, the sketch portion of the fifth content is on top of and/or overlaid on the non-sketch portion of the fifth content. In some embodiments, the non-sketch portion of the fifth content is rasterized content. In some embodiments, the sketch portion is rasterized in response to receiving the fifth content. In some embodiments, the sketch portion of the fifth content is different from the sketch portion of the first content. In some embodiments, after (and/or in response to) rasterizing the sketch portion of the fifth content to generate the third rasterized content, the device generates, using the diffusion model that is based on the third rasterized content and the non-sketch portion of the fifth content, sixth content (e.g., the same as or different from the fifth content). In some embodiments, the diffusion model is conditioned on the third rasterized content and the non-sketch portion of the fifth content while the diffusion model generates the sixth content based on a set of one or more words. In some embodiments, the diffusion model does not use the third rasterized content and/or the non-sketch portion of the fifth content to generate the sixth content (e.g., the diffusion model is conditioned based on the third rasterized content and/or the non-sketch portion of the fifth content but the diffusion model does not receive the third rasterized content and/or the non-sketch portion of the fifth content as an input to the diffusion model).

In some embodiments, the rasterized content is first rasterized content. In some embodiments, the device receives fifth content (e.g., an image, a video, a sketch, and/or a set of one or more words). In some embodiments, the fifth content is received via a framework (e.g., a software framework) used by an application of the device. In some embodiments, the fifth content includes a handwritten sketch and rasterized content separate from the handwritten sketch. In some embodiments, the fifth content includes a handwritten sketch and an image, such as a red-green-blue image. In some embodiments, the fifth content includes content that was pasted into a document and content that was drawn and/or otherwise added to the document based on detecting input movement. In some embodiments, the device rasterizes a sketch portion of the fifth content to generate third rasterized content without rasterizing a non-sketch portion of the fifth content, wherein the third rasterized content is different from the first rasterized content, and wherein the non-sketch portion of the fifth content is different from the non-sketch portion of the first content. In some embodiments, before rasterizing the sketch portion of the fifth content, the device separates the sketch portion of the fifth content from the non-sketch portion of the fifth content. In some embodiments, the sketch portion of the fifth content is on top of and/or overlaid on the non-sketch portion of the fifth content. In some embodiments, the non-sketch portion of the fifth content is rasterized content. In some embodiments, the sketch portion is rasterized in response to receiving the fifth content. In some embodiments, the sketch portion of the fifth content is different from the sketch portion of the first content. In some embodiments, after (and/or in response to) rasterizing the sketch portion of the fifth content to generate the third rasterized content, the device generates, using the diffusion model that is based on the third rasterized content and the non-sketch portion of the fifth content, sixth content (e.g., the same as or different from the fifth content). In some embodiments, the diffusion model is conditioned on the third rasterized content and the non-sketch portion of the fifth content while the diffusion model generates the sixth content based on a set of one or more words. In some embodiments, the diffusion model does not use the third rasterized content and/or the non-sketch portion of the fifth content to generate the sixth content (e.g., the diffusion model is conditioned based on the third rasterized content and/or the non-sketch portion of the fifth content but the diffusion model does not receive the third rasterized content and/or the non-sketch portion of the fifth content as an input to the diffusion model).

Note that details of the processes described above with respect to method 600 (e.g., FIG. 6) are also applicable in an analogous manner to other methods described herein. For example, method 700 optionally includes one or more of the characteristics of the various methods described above with reference to method 600. For example, the sketched content of method 700 can be the first content of method 600. For brevity, these details are not repeated herein.

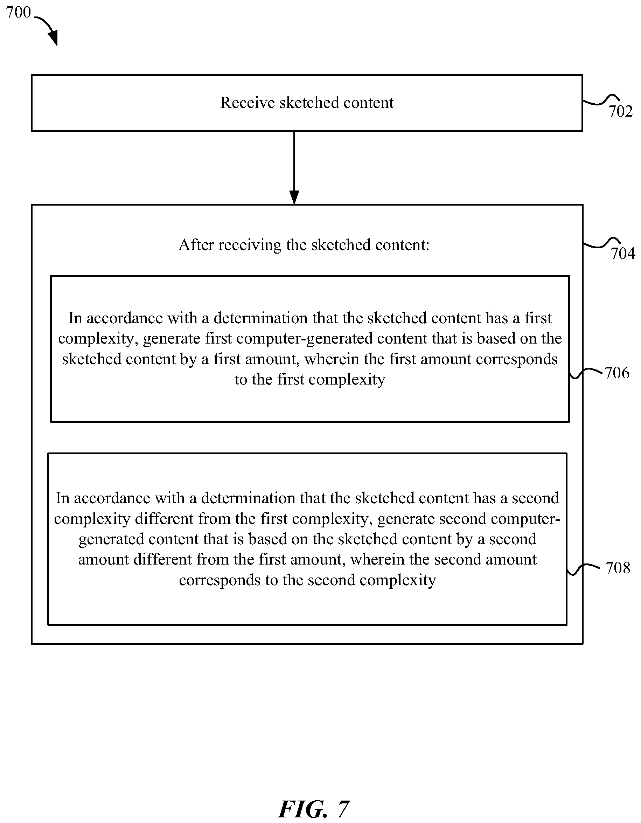

FIG. 7 is a flow diagram illustrating a method (e.g., method 700) for generating content based on sketch complexity in accordance with some embodiments. Some operations in method 700 are, optionally, combined, the orders of some operations are, optionally, changed, and some operations are, optionally, omitted.

As described below, method 700 provides an intuitive way for generating content based on sketch complexity. Method 700 reduces the cognitive burden on a user, thereby creating a more efficient human-machine interface. For battery-operated computing devices, enabling a user to interact with such devices faster and more efficiently conserves power and increases the time between battery charges.

In some embodiments, method 700 is performed at a device (e.g., at a system process (e.g., 304 and/or 306) and/or an application (e.g., 302 and/or 304) of the device). In some embodiments, the device is a computer system, a watch, a phone, a tablet, a fitness tracking device, a processor, a head-mounted display (HMD) device, a communal device, a media device, a speaker, a television, an electronic device, and/or a personal computing device. In some embodiments, the system process is a process of an operating system of the device. In some embodiments, the application is a user application of the device, such as an application that was installed on the device.

The device receives (702) (e.g., from and/or via an application of the device) sketched content (e.g., a sketch and/or handwritten content) (e.g., 308a, 308b, 312a, 508a, 508b, 510c, and/or 512a). In some embodiments, the sketched content was drawn and/or otherwise added to the document based on detecting input movement. In some embodiments, the sketched content is received via a framework (e.g., a software framework) used by the application of the device.

After (704) (and/or in response to) receiving the sketched content, in accordance with a determination that the sketched content has a first complexity (e.g., a sketch complexity and/or a complexity of the sketched content) (e.g., 312b), the device generates (706) (e.g., using a model, such as a diffusion model and/or a conditional-based diffusion model) (e.g., 318) first computer-generated content (e.g., the same as or different from the sketched content) (e.g., 318a, 318b, 318c, 518a, 518b, and/or 518c) that is based on the sketched content by a first amount, wherein the first amount corresponds to the first complexity. In some embodiments, the system process receives an indication of the first complexity from an application of the device, such as via a framework (e.g., a software framework) used by the application of the device.

After (704) receiving the sketched content, in accordance with a determination that the sketched content has a second complexity (e.g., 312b) different from the first complexity, the device generates (708) (e.g., using the model) second computer-generated content (e.g., the same as or different from the sketched content and/or the first computer-generated content) (e.g., 318a, 318b, 318c, 518a, 518b, and/or 518c) that is based on the sketched content by a second amount different from the first amount (e.g., the second computer-generated content is generated to be based on the sketched content a different amount than the first computer-generated content), wherein the second amount corresponds to the second complexity (e.g., without generating the first computer-generated content). In some embodiments, computer-generated content is generated to more resemble and/or look more similar to the sketched content when the sketched content is determined to be more complex.

In some embodiments, the determination that the sketched content has the first complexity includes a determination based on a number of strokes within the sketched content (e.g., that the number of strokes within the sketched content exceeds a threshold, such as 5-30 strokes). In some embodiments, the determination that the sketched content has the second complexity includes a determination based on the number of strokes within the sketched content (e.g., that the number of strokes within the sketched content does not exceed the threshold).

In some embodiments, the determination that the sketched content has the first complexity includes a determination based on a number of shapes (e.g., distinct and/or different shapes) within the sketched content (e.g., that the number of shapes within the sketched content exceeds a threshold, such as 5-30 shapes). In some embodiments, the determination that the sketched content has the second complexity includes a determination based on the number of shapes within the sketched content (e.g., that the number of shapes within the sketched content does not exceed the threshold).

In some embodiments, the determination that the sketched content has the first complexity includes a determination based on a curvature of one or more strokes within the sketched content (e.g., that the curvature exceeds a threshold, such as 1-30 radians). In some embodiments, the determination that the sketched content has the second complexity includes a determination based on the curvature of the one or more strokes within the sketched content (e.g., that the curvature does not exceed the threshold).

In some embodiments, the determination that the sketched content has the first complexity includes a determination based on an amount of time that input was detected to create (and/or draw) the first content (e.g., (1) time while the input was detected or (2) time from when a first input was detected and time when a last input was detected) (e.g., that the amount of time exceeds a threshold, such as 30-500 seconds). In some embodiments, the determination that the sketched content has the second complexity includes a determination based on the amount of time that input was detected to create (and/or draw) the first content (e.g., that the amount of time does not exceed the threshold).

In some embodiments, the sketched content is first sketch content. In some embodiments, in conjunction with (e.g., before, while, and/or after) receiving the first sketched content, the device receives a first set of one or more words (e.g., a text prompt) (e.g., 308c, 312c, 508d, and/or 512e) corresponding to the first sketched content, wherein the first computer-generated content (and/or the second computer-generated content) is generated based on the first set of one or more words. In some embodiments, the first set of one or more words are received with the first sketched content. In some embodiments, the device receives (e.g., from and/or via an application of the device) second sketched content (e.g., a sketch and/or handwritten content), wherein the second sketched content is the same as the first sketched content. In some embodiments, the second sketched content was drawn and/or otherwise added to the document based on detecting input movement. In some embodiments, the second sketched content is received via a framework (e.g., a software framework) used by the application of the device. In some embodiments, in conjunction with (e.g., before, while, and/or after) receiving the second sketched content, the device receives a second set of one or more words (e.g., a text prompt) corresponding to the second sketched content, wherein the second set of one or more words are different from the first set of one or more words. In some embodiments, the second set of one or more words are received with the second sketched content. In some embodiments, after (and/or in response to) receiving the sketched content and in accordance with a determination that the second sketched content has the first complexity, the device generates (e.g., using a model, such as a diffusion model and/or a conditional-based diffusion model) third computer-generated content (e.g., the same as or different from the second sketched content) that is based on (1) the second sketched content by the first amount and (2) the second set of one or more words, wherein the third computer-generated content is different from the first computer-generated content (e.g., as a result of the second set of one or more words being different from the first set of one or more words).

In some embodiments, the first computer-generated content (and/or the second computer-generated content) is an image.

In some embodiments, the first computer-generated content (and/or the second computer-generated content) is a video (and/or an animation).

Note that details of the processes described above with respect to method 700 (e.g., FIG. 7) are also applicable in an analogous manner to other methods described herein. For example, method 800 optionally includes one or more of the characteristics of the various methods described above with reference to method 700. For example, the first portion of method 800 can be the sketched content of method 700. For brevity, these details are not repeated herein.

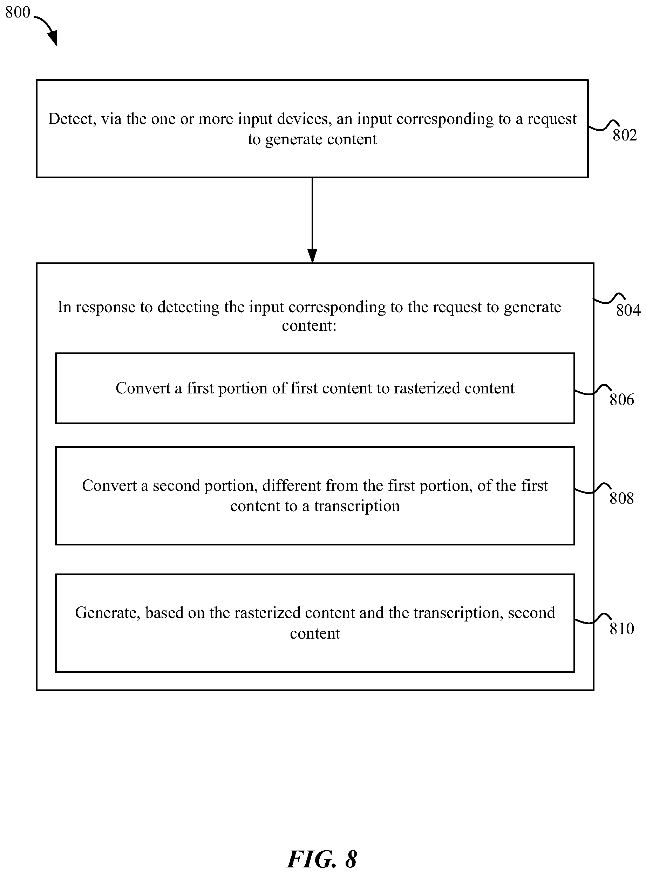

FIG. 8 is a flow diagram illustrating a method (e.g., method 800) for generating content by pre-processing different portions of content differently in accordance with some embodiments. Some operations in method 800 are, optionally, combined, the orders of some operations are, optionally, changed, and some operations are, optionally, omitted.

As described below, method 800 provides an intuitive way for generating content by pre-processing different portions of content differently. Method 800 reduces the cognitive burden on a user, thereby creating a more efficient human-machine interface. For battery-operated computing devices, enabling a user to interact with such devices faster and more efficiently conserves power and increases the time between battery charges.

In some embodiments, method 800 is performed at a device that is communication with one or more input devices (e.g., at a system process (e.g., 304 and/or 306) and/or an application (e.g., 302 and/or 304) of the device). In some embodiments, the device is a computer system, a watch, a phone, a tablet, a fitness tracking device, a processor, a head-mounted display (HMD) device, a communal device, a media device, a speaker, a television, an electronic device, and/or a personal computing device. In some embodiments, the system process is a process of an operating system of the device. In some embodiments, the application is a user application of the device, such as an application that was installed on the device. In some embodiments, the one or more input devices includes a camera, a depth sensor, a microphone, a hardware input mechanism, a rotatable input mechanism, a heart monitor, a temperature sensor, and/or a touch-sensitive surface.

The device detects (802), via the one or more input devices, an input (e.g., a selection input and/or a non-selection input) corresponding to a request to generate content. In some embodiments, a selection input includes a tap input, a verbal input, an audible command, a gaze input, an air gesture, a mouse click, and/or a submission of a user-interface element and/or a physical hardware element. In some embodiments, a non-selection input includes a verbal input, an audible request, an audible command, an audible statement, a swipe input, a hold-and-drag input, a gaze input, an air gesture, and/or a mouse movement.

In response to (804) detecting the input corresponding to the request to generate content, the device converts (806) a first portion (e.g., a sketch, sketched content, and/or handwritten content) (e.g., 508b) of first content to rasterized content (e.g., a rasterized image) (e.g., 510c). In some embodiments, the input corresponding to the request to generate content is a tap-and-drag input that circles the first content. In some embodiments, the input corresponding to the request to generate content is a tap input on a generate button.

In response to (804) detecting the input corresponding to the request to generate content, the device converts (808) a second portion (e.g., typed text, a sketch, sketched content, handwritten content, and/or audio) (e.g., 508d), different from the first portion, of the first content to a transcription (and/or a transcript) (e.g., a set of one or more words that correspond to the second portion) (e.g., 508d and/or 512e).

In response to (804) detecting the input corresponding to the request to generate content, the device generates (810) (e.g., 318), based on the rasterized content and the transcription, second content (e.g., the same as or different from the first content) (e.g., 518a, 518b, and/or 518c).

In some embodiments, the first portion includes a sketched content (e.g., a sketch and/or handwritten content). In some embodiments, before detecting the input corresponding to the request to generate content, the device detects, via the one or more input devices, a set of one or more handwritten inputs (e.g., corresponding to the sketched content). In some embodiments, in response to detecting the set of one or more handwritten inputs, the device displays the sketched content.

In some embodiments, the first portion includes a computer-generated shape (e.g., a circle, a square, a rectangle, and/or a line). In some embodiments, a size of the computer-generated shape is based on an input detected via the one or more input devices. In some embodiments, before detecting the input corresponding to the request to generate content, the device detects, via the one or more input devices, a set of one or more inputs (e.g., corresponding to the computer-generated shape). In some embodiments, in response to detecting the set of one or more inputs, the device displays the computer-generated shape.

In some embodiments, the second portion includes typed text (e.g., inside and/or outside of a text box). In some embodiments, before detecting the input corresponding to the request to generate content, the device detects, via the one or more input devices, a set of one or more inputs (e.g., corresponding to the typed text, such as selection inputs directed to a set of one or more keys on a keyboard). In some embodiments, in response to detecting the set of one or more inputs, the device displays the typed text. In some embodiments, the transcription is and/or includes the typed text.

In some embodiments, the second portion includes handwritten (and/or sketched) text. In some embodiments, before detecting the input corresponding to the request to generate content, the device detects, via the one or more input devices, a set of one or more handwritten inputs (e.g., corresponding to the handwritten text). In some embodiments, in response to detecting the set of one or more handwritten inputs, the device displays the handwritten text. In some embodiments, the transcription is and/or includes a transcription of the handwritten text.

In some embodiments, the second content is generated based on an image (and/or a video) within the first content that is not included in the rasterized content.

In some embodiments, the rasterized content includes an image within the first content (e.g., the second content is generated based on the image).

In some embodiments, generating the second content includes sending the rasterized image to a neural network (and/or a process including a neural network to use the neural network with the rasterized image) (e.g., 316) to condition a diffusion model to generate the second content using the transcription.

Note that details of the processes described above with respect to method 800 (e.g., FIG. 8) are also applicable in an analogous manner to other methods described herein. For example, method 400 optionally includes one or more of the characteristics of the various methods described above with reference to method 800. For example, the first content of method 400 can be the first portion of method 800. For brevity, these details are not repeated herein.

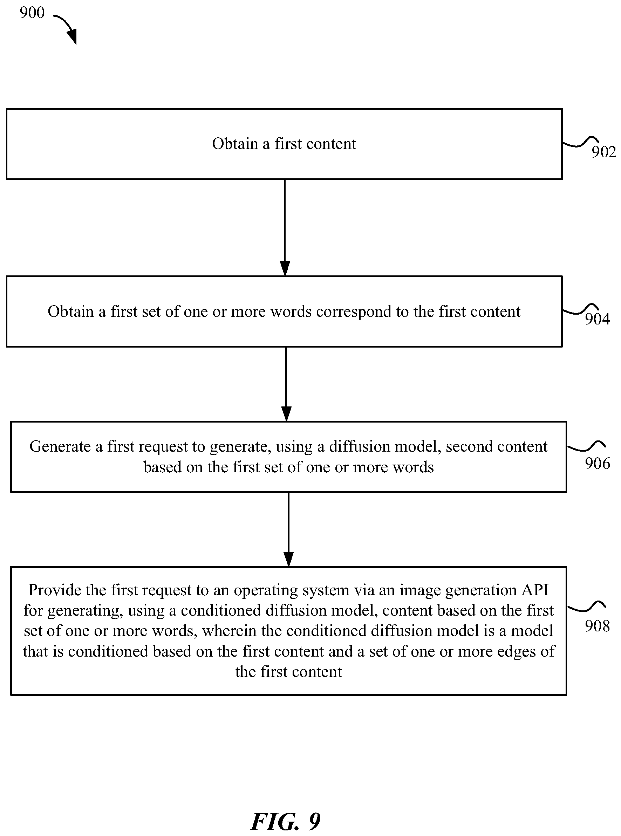

FIG. 9 is a flow diagram illustrating a method (e.g., method 900) for an application to generate content using edges of content in accordance with some embodiments. Some operations in method 900 are, optionally, combined, the orders of some operations are, optionally, changed, and some operations are, optionally, omitted.

As described below, method 900 provides an intuitive way for an application to generate content using edges of content. Method 900 reduces the cognitive burden on a user, thereby creating a more efficient human-machine interface. For battery-operated computing devices, enabling a user to interact with such devices faster and more efficiently conserves power and increases the time between battery charges.

In some embodiments, method 900 is performed at an application (e.g., 302 and/or 304) of a device.

The application obtains (902) (e.g., using a framework, SDK, and/or API) a first content (e.g., 160, 308a, and/or 508a).

The application obtains (904) (e.g., using a framework, SDK, and/or API) a first set of one or more words (e.g., a text prompt) (e.g., 160, 308a, and/or 508a) corresponding to the first content. In some embodiments, the first set of one or more words are received with the first content.

The application generates (906) (e.g., using a framework, SDK, and/or API) a first request to generate, using a diffusion model (e.g., used by an AI process or a generative AI process) (e.g., 318), second content (e.g., the same as or different from the first content) (e.g., automatically-generated visual content and/or generative visual content) (e.g., 318a, 318b, 318c, 518a, 518b, and/or 518c) based on the first set of one or more words. In some embodiments, the framework is loaded in a process space (e.g., 302 and/or 304) of the application. In some embodiments, the application is different from a system process (e.g., 304 and/or 306). In some embodiments, the application is executing on the device. In some embodiments, the application is executing on another device different from the device.

The application provides (908) the first request to an operating system (e.g., S120, 304, and/or 306) via an image generation API for generating, using a conditioned diffusion model (e.g., 318), content (e.g., 318a, 318b, 318c, 518a, 518b, and/or 518c) based on the first set of one or more words, wherein the conditioned diffusion model is a model that is conditioned based on the first content and a set of one or more edges (e.g., 314b and/or 514b) of the first content (e.g. related to a process performed by an OS implementation module). In some embodiments, the application provides a conditioning request to condition the model based on the content and the set of one or more edges of the first content. In some embodiments, the conditioning request identifies or includes the first content and/or the one or more edges. In some embodiments, the first request identifies or includes the first content and/or the one or more edges. In other words, the application can condition a diffusion model before issuing an image generation request or the image generation request can trigger both the conditioning and the image generation.

Note that details of the processes described above with respect to method 900 (e.g., FIG. 9) are also applicable in an analogous manner to other methods described herein. For example, method 400 optionally includes one or more of the characteristics of the various methods described above with reference to method 900. For example, the first content of method 400 can be the first content of method 900. For brevity, these details are not repeated herein.

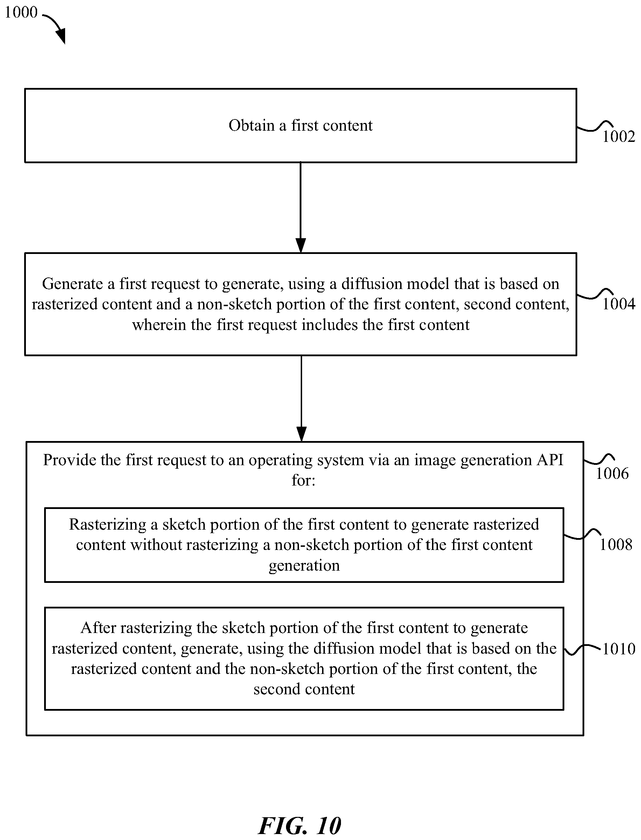

FIG. 10 is a flow diagram illustrating a method (e.g., method 1000) for an application to generate content by rasterizing content in accordance with some embodiments. Some operations in method 1000 are, optionally, combined, the orders of some operations are, optionally, changed, and some operations are, optionally, omitted.

As described below, method 1000 provides an intuitive way for an application to generate content by rasterizing content. Method 1000 reduces the cognitive burden on a user, thereby creating a more efficient human-machine interface. For battery-operated computing devices, enabling a user to interact with such devices faster and more efficiently conserves power and increases the time between battery charges.

In some embodiments, method 1000 is performed at an application (e.g., 302 and/or 304) of a device.

The application obtains (1002) (e.g., using a framework, SDK, and/or API) a first content (e.g., 160, 308a, and/or 508a).

The application generates (1004) (e.g., using a framework, SDK, and/or API) a first request to generate, using a diffusion model (e.g., a conditional-based diffusion model) (e.g., used by an AI process or a generative AI process) (e.g., 318) that is based on rasterized content (e.g., 510c) and a non-sketch portion (e.g., 508c) of the first content, second content (e.g., automatically-generated visual content and/or generative visual content) (e.g., 318a, 318b, 318c, 518a, 518b, and/or 518c), wherein the first request includes (and/or references) the first content.

The application provides (1006) the first request to an operating system (e.g., S120, 304, and/or 306) via an image generation API for: (1008) rasterizing a sketch portion (e.g., 508b) of the first content to generate rasterized content (e.g., 510c) without rasterizing a non-sketch portion (e.g., 508c) of the first content generation; and after (1010) (and/or in response to) rasterizing the sketch portion of the first content to generate rasterized content, generating, using the diffusion model (e.g., a conditional-based diffusion model) that is based on the rasterized content and the non-sketch portion of the first content, the second content..

Note that details of the processes described above with respect to method 1000 (e.g., FIG. 10) are also applicable in an analogous manner to other methods described herein. For example, method 600 optionally includes one or more of the characteristics of the various methods described above with reference to method 1000. For example, the first content of method 600 can be the first content of method 1000. For brevity, these details are not repeated herein.

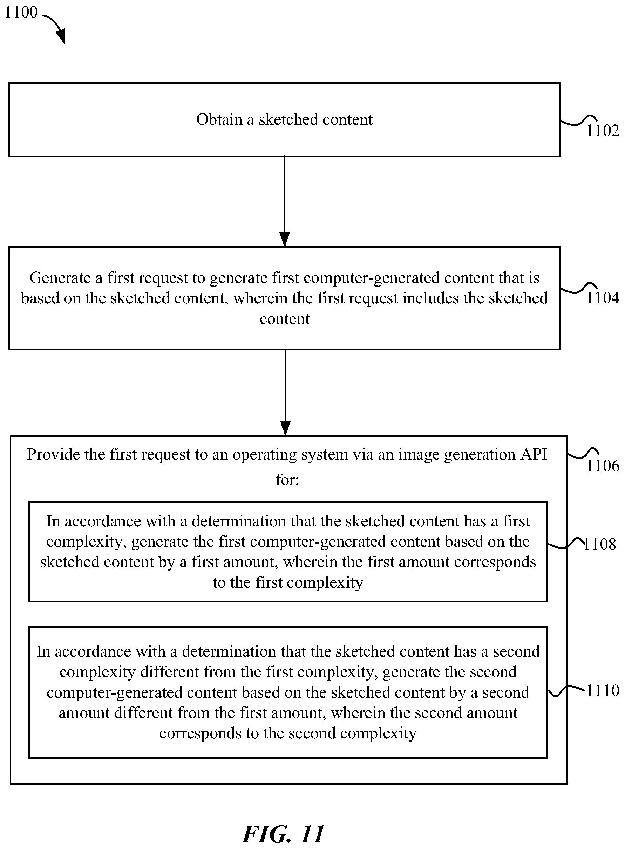

FIG. 11 is a flow diagram illustrating a method (e.g., method 1100) for an application to generate content based on sketch complexity in accordance with some embodiments. Some operations in method 1100 are, optionally, combined, the orders of some operations are, optionally, changed, and some operations are, optionally, omitted.

As described below, method 1100 provides an intuitive way for an application to generate content based on sketch complexity. Method 1100 reduces the cognitive burden on a user, thereby creating a more efficient human-machine interface. For battery-operated computing devices, enabling a user to interact with such devices faster and more efficiently conserves power and increases the time between battery charges.

In some embodiments, method 1100 is performed at an application (e.g., 302 and/or 304) of a device.

The application obtains (1102) (e.g., using a framework, SDK, and/or API) a sketched content (e.g., 160, 308a, and/or 508a).

The application generates (1104) a first request to generate (e.g., using a model (e.g., 318), such as a diffusion model and/or a conditional-based diffusion model) first computer-generated content (e.g., the same as or different from the sketched content) (e.g., 318a, 318b, 318c, 518a, 518b, and/or 518c) that is based on the sketched content, wherein the first request includes (and/or references) the sketched content.

The application provides (1106) the first request to an operating system (e.g., S120, 304, and/or 306) via an image generation API for: (1108) in accordance with a determination that the sketched content has a first complexity (e.g., a sketch complexity and/or a complexity of the sketched content) (e.g., 310b, 312b, and/or 512b), generating (e.g., using a model, such as a diffusion model and/or a conditional-based diffusion model) (e.g., 318) the first computer-generated content (e.g., the same as or different from the sketched content) (e.g., 318a, 318b, 318c, 518a, 518b, and/or 518c) based on the sketched content by a first amount, wherein the first amount corresponds to the first complexity; and in accordance with (1110) a determination that the sketched content has a second complexity different from the first complexity, generating (e.g., using the model) the second computer-generated content (e.g., the same as or different from the sketched content and/or the first computer-generated content) based on the sketched content by a second amount different from the first amount (e.g., the second computer-generated content is generated to be based on the sketched content a different amount than the first computer-generated content), wherein the second amount corresponds to the second complexity (e.g., without generating the first computer-generated content). In some embodiments, the system process receives an indication of the first complexity from an application of the device, such as via a framework (e.g., a software framework) used by the application of the device. In some embodiments, computer-generated content is generated to more resemble and/or look more similar to the sketched content when the sketched content is determined to be more complex.

Note that details of the processes described above with respect to method 1100 (e.g., FIG. 11) are also applicable in an analogous manner to other methods described herein. For example, method 700 optionally includes one or more of the characteristics of the various methods described above with reference to method 1100. For example, the sketched content of method 700 can be the sketched content of method 1100. For brevity, these details are not repeated herein.

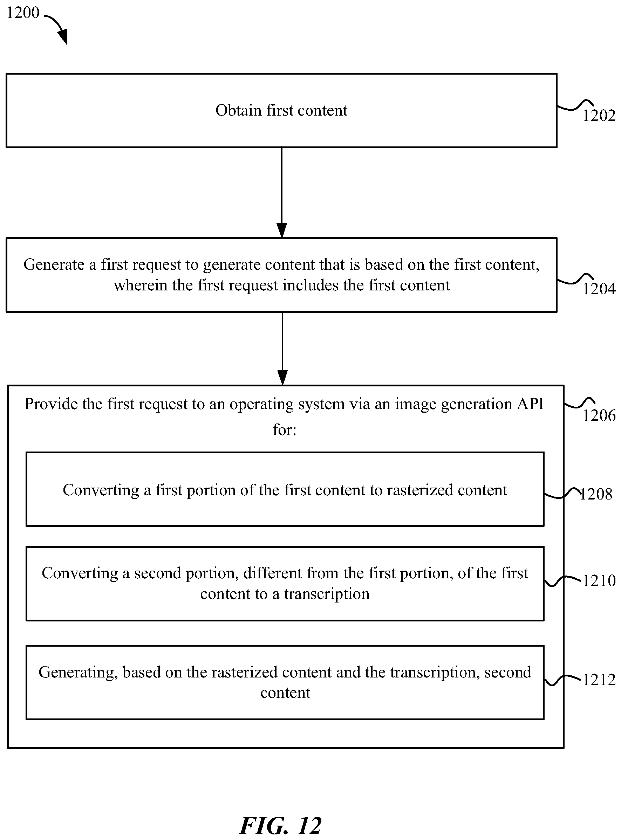

FIG. 12 is a flow diagram illustrating a method (e.g., method 1200) for an application to generate content by pre-processing different portions of content differently in accordance with some embodiments. Some operations in method 1200 are, optionally, combined, the orders of some operations are, optionally, changed, and some operations are, optionally, omitted.

As described below, method 1200 provides an intuitive way for an application to generate content by pre-processing different portions of content differently. Method 1200 reduces the cognitive burden on a user, thereby creating a more efficient human-machine interface. For battery-operated computing devices, enabling a user to interact with such devices faster and more efficiently conserves power and increases the time between battery charges.

In some embodiments, method 1200 is performed at an application (e.g., 302 and/or 304) of a device.

The application obtains (1202) (e.g., using a framework, SDK, and/or API) first content (e.g., 160, 308a, and/or 508a).

The application generates (1204) a first request to generate (e.g., using a model, such as a diffusion model (e.g., used by an AI process or a generative AI process) and/or a conditional-based diffusion model) content (e.g., the same as or different from the sketched content) (e.g., 318a, 318b, 318c, 518a, 518b, and/or 518c) that is based on the first content, wherein the first request includes (and/or references) the first content.

The application provides (1206) the first request to an operating system (e.g., S120, 304, and/or 306) via an image generation API for: (1208) converting a first portion (e.g., a sketch, sketched content, and/or handwritten content) (e.g., 308a and/or 508a) of the first content to rasterized content (e.g., a rasterized image); converting (1210) a second portion (e.g., typed text, a sketch, sketched content, handwritten content, and/or audio) (e.g., 308a and/or 508a), different from the first portion, of the first content to a transcription (and/or a transcript) (e.g., a set of one or more words that correspond to the second portion); and generating, (1212) based on the rasterized content and the transcription, second content (e.g., the same as or different from the first content) (e.g., automatically-generated visual content and/or generative visual content) (e.g., 318a, 318b, 318c, 518a, 518b, and/or 518c).. In some embodiments, an input corresponding to the request to generate content is a tap-and-drag input that circles the first content. In some embodiments, an input corresponding to the request to generate content is a tap input on a generate button.

Note that details of the processes described above with respect to method 1200 (e.g., FIG. 12) are also applicable in an analogous manner to the methods described herein. For example, method 800 optionally includes one or more of the characteristics of the various methods described herein with reference to method 1200. For example, the first portion of method 800 can be the first content of method 1200. For brevity, these details are not repeated herein.

In some embodiments, one or more of methods 400, 600, 700, 800, 900, 1000, 1100, and 1200 (FIGS. 4, 6, 7, 8, 9, 10, 11, and 12) is performed at a first computer system (as described herein) via a system process (e.g., an operating system process) that is different from one or more applications executing and/or installed on the first computer system.

In some embodiments, one or more of methods 400, 600, 700, 800, 900, 1000, 1100, and 1200 (FIGS. 4, 6, 7, 8, 9, 10, 11, and 12) is performed at a first computer system (as described herein) by an application that is different from a system process. In some embodiments, the instructions of the application, when executed, control the first computer system to perform one or more of methods 400, 600, 700, 800, 900, 1000, 1100, and 1200 (FIGS. 4, 6, 7, 8, 9, 10, 11, and 12) by calling an application programming interface (API) provided by the system process. In some embodiments, the application performs at least a portion of one or more of methods 400, 600, 700, 800, 900, 1000, 1100, and 1200 (FIGS. 4, 6, 7, 8, 9, 10, 11, and 12) without calling the API. In some embodiments, the application can be any suitable type of application, including, for example, one or more of: a browser application, a super-app that functions as an application execution environment for plug-ins, widgets or other applications, a fitness application, a health application, a digital payments application, a media application, a social network application, a messaging application, and/or a maps application. In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform one or more of methods 400, 600, 700, 800, 900, 1000, 1100, and 1200 (FIGS. 4, 6, 7, 8, 9, 10, 11, and 12) by calling an application programming interface (API) provided by the system process using one or more parameters. In some embodiments, exemplary APIs provided by the system process include one or more of: a Pairing API (e.g., for establishing secure connection, e.g., with an accessory), a Device detection API (e.g., for locating nearby devices, e.g., Apple TVs, other iPhones), a UIKit API (e.g., for generating user interfaces), a Location Detection API, a FindMy API, a Maps API, a Health Sensor API, a Sensor API, a Messaging API, a Push Notification API, a Streaming API, a collaboration API, a video conferencing API (e.g., FaceTime/SharePlay API), a web browser API (e.g., WebKit API), a CarPlay API, a Networking API, a WiFi API, a Bluetooth API, an NFC API, a UWB API, a Fitness API, a HomeKit API, NameDrop API, Photos API, Camera API, and/or an Image Processing API. In some embodiments, at least one API is a software module (e.g., a collection of computer-readable instructions) that provides an interface that allows a different module (e.g., API calling module) to access and use one or more functions, methods, procedures, data structures, classes, and/or other services provided by an OS implementation module of the system process. The API can define one or more parameters that are passed between the API calling module and the OS implementation module. The OS implementation module is an operating system software module (e.g., a collection of computer-readable instructions) that is constructed to perform an operation in response to receiving an API call via the API. In some embodiments, the OS implementation module is constructed to provide an API response (via the API) as a result of processing an API call.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve content generation based on a hand drawn sketch, an image, and/or text. The present disclosure contemplates that in some instances, this gathered data can include a user-supplied sketch, image, text, and/or other information that may reflect the user's creative intent, desired style, and/or specific requirements for content to be generated. This data is used to guide the content generation process and/or ensure that generated content aligns with the user's expectations.

The present disclosure recognizes that the use of such content generation data, in the present technology, can be used to the benefit of users. For example, the content generation data can be used to better match a user's intended output style, and/or content. Accordingly, use of such content generation data enables generation of more personalized and/or intended content. Further, other uses for content generation data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of image capture, the present technology can be configured to allow users to select to "opt in" or "opt out" of participation in the collection of personal information data during registration for services.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be generated for users by inferring content generation preferences based on non-personal information data or a bare minimum amount of personal information, such as the content being generated by the device associated with a user or other non-personal information.

As described herein, content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content that is generated via one or more artificial intelligence (AI) processes is referred to as generative content (e.g., generative images, generative graphics, generative video, generative audio, and/or generative text). Generative content is typically generated by an AI process based on a prompt that is provided to the AI process. An AI process typically uses one or more AI models to generate an output based on an input. An AI process optionally includes one or more pre-processing steps to adjust the input before it is used by the AI model to generate an output (e.g., adjustment to a user-provided prompt, creation of a system-generated prompt, and/or AI model selection). An AI process optionally includes one or more post-processing steps to adjust the output by the AI model (e.g., passing AI model output to a different AI model, upscaling, downscaling, cropping, formatting, and/or adding or removing metadata) before the output of the AI model is used for other purposes such as being provided to a different software process for further processing or being presented (e.g., visually or audibly) to a user. An AI process that generates generative content is sometimes referred to as a generative AI process.

A prompt for generating generative content can include one or more of: one or more words (e.g., a natural language prompt that is written or spoken), one or more images, one or more drawings, and/or one or more videos. AI processes can include machine learning models including neural networks. Neural networks can include transformer-based deep neural networks such as large language models (LLMs). Generative pre-trained transformer models are a type of LLM that can be effective at generating novel generative content based on a prompt. Some AI processes use a prompt that includes text to generate either different generative text, generative audio content, and/or generative visual content. Some AI processes use a prompt that includes visual content and/or an audio content to generate generative text (e.g., a transcription of audio and/or a description of the visual content). Some multi-modal AI processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an AI process that include phrasing, a specified style, relevant context (e.g., starting point content and/or one or more examples), and/or a role for the AI process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseudo-random seed content is used as a starting point for creating the generative content). For example, when generating an image from a diffusion model, a random noise pattern is iteratively denoised based on the prompt to generate an image that is based on the prompt. While specific types of AI processes have been described herein, it should be understood that a variety of different AI processes could be used to generate generative content based on a prompt.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize ML models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML models. Accordingly, user-collected data can be protected. In some implementations, data from multiple devices can be combined in a privacy-preserving manner to train the ML models.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

In some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

In some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

Aspects of the invention are disclosed in the following numbered clauses:
1. A method, comprising:
   at a device:
   receiving first content;
   receiving a first set of one or more words corresponding to the first content;
   conditioning a diffusion model based on a set of one or more edges of the first content; and
   after conditioning the diffusion model based on the set of one or more edges, generating, using the diffusion model, second content on the first set of one or more words.
2. The method of clause **1,** wherein the first set of one or more words is a transcription of handwritten text.
3. The method of clause 1, wherein the first set of one or more words is typed text.
4. The method of clause 1, wherein the first set of one or more words is computer generated.
5. The method of clause 1, wherein the first content is a rasterized image of a handwritten sketch.
6. The method of clause 5, wherein the diffusion model is conditioned based on a complexity of the handwritten sketch.
7. The method of clause 1, further comprising:
   in conjunction with receiving the first content, receiving a set of information corresponding to one or more requirements of content generated using the diffusion model, wherein the second content is generated using the diffusion model that is configured based on the set of information.
8. The method of clause 1, wherein conditioning the diffusion model is performed via a neural network, wherein an output of the neural network is a set of one or more values, and wherein the output is provided to the diffusion model to change how the diffusion model operates.
9. The method of clause 1, wherein the second content is an image.
10. The method of clause 1, wherein the second content is a video.
11. The method of clause 1, further comprising:
   receiving third content, wherein the third content is the same as the first content;
   receiving a second set of one or more words different from the first set of one or more words;
   conditioning the diffusion model based on a set of one or more edges of the third content; and
   after conditioning the diffusion model based on the set of one or more edges of the third content, generating, using the diffusion model, fourth content based on the second set of one or more words, wherein the fourth content is different from the second content.
12. The method of clause 1, further comprising:
   receiving third content, wherein the third content is the same as the first content;
   receiving a second set of one or more words different from the first set of one or more words;
   conditioning the diffusion model based on a set of one or more edges of the third content; and
   after conditioning the diffusion model based on the set of one or more edges of the third content, generating, using the diffusion model, fourth content based on the second set of one or more words, wherein the fourth content is the same as the second content.
13. The method of clause 1, further comprising:
   receiving fifth content, wherein the fifth content is different from the first content;
   receiving a third set of one or more words that are the same as the first set of one or more words;
   conditioning the diffusion model based on a set of one or more edges of the fifth content; and
   after conditioning the diffusion model based on the set of one or more edges of the fifth content, generating, using the diffusion model, sixth content based on the third set of one or more words, wherein the fifth content is different from the second content.
14. The method of clause 1, further comprising:
   receiving fifth content, wherein the fifth content is different from the first content;
   receiving a third set of one or more words that are the same as the first set of one or more words;
   conditioning the diffusion model based on a set of one or more edges of the fifth content; and
   after conditioning the diffusion model based on the set of one or more edges of the fifth content, generating, using the diffusion model, sixth content based on the third set of one or more words, wherein the fifth content is the same as the second content.
15. The method of clause 1, further comprising:
   before conditioning the diffusion model based on the first content and the set of one or more edges of the first content, identifying the set of one or more edges of the first content.
16. The method of clause 1, further comprising:
   before conditioning the diffusion model based on the first content and the set of one or more edges of the first content, receiving the set of one or more edges of the first content.
17. A non-transitory computer-readable storage medium storing one or more programs configured to be executed by one or more processors of a device, the one or more programs including instructions for:
   receiving first content;
   receiving a first set of one or more words corresponding to the first content;
   conditioning a diffusion model based on a set of one or more edges of the first content; and
   after conditioning the diffusion model based on the set of one or more edges, generating, using the diffusion model, second content based on the first set of one or more words.
18. A device, comprising:
   one or more processors; and
   memory storing one or more programs configured to be executed by the one or more processors, the one or more programs including instructions for:
      receiving first content;
      receiving a first set of one or more words corresponding to the first content;
      conditioning a diffusion model based on a set of one or more edges of the first content; and
      after conditioning the diffusion model based on the set of one or more edges, generating, using the diffusion model, second content based on the first set of one or more words.

## Claims

1. A method, comprising:
at a device:
receiving first content;
receiving a first set of one or more words corresponding to the first content;
conditioning a diffusion model based on a set of one or more edges of the first content; and
after conditioning the diffusion model based on the set of one or more edges, generating, using the diffusion model, second content on the first set of one or more words.

2. The method of claim 1, wherein the first set of one or more words is a transcription of handwritten text.

3. The method of claim 1, wherein the first set of one or more words is typed text.

4. The method of claim 1, wherein the first set of one or more words is computer generated.

5. The method of any one of claims 1-4, wherein the first content is a rasterized image of a handwritten sketch.

6. The method of claim 5, wherein the diffusion model is conditioned based on a complexity of the handwritten sketch.

7. The method of any one of claims 1-6, further comprising:
in conjunction with receiving the first content, receiving a set of information corresponding to one or more requirements of content generated using the diffusion model, wherein the second content is generated using the diffusion model that is configured based on the set of information.

8. The method of any one of claims 1-7, wherein conditioning the diffusion model is performed via a neural network, wherein an output of the neural network is a set of one or more values, and wherein the output is provided to the diffusion model to change how the diffusion model operates.

9. The method of any one of claims 1-8, further comprising:
receiving third content, wherein the third content is the same as the first content;
receiving a second set of one or more words different from the first set of one or more words;
conditioning the diffusion model based on a set of one or more edges of the third content; and
after conditioning the diffusion model based on the set of one or more edges of the third content, generating, using the diffusion model, fourth content based on the second set of one or more words, wherein the fourth content is different from the second content.

10. The method of any one of claims 1-9, further comprising:
receiving third content, wherein the third content is the same as the first content;
receiving a second set of one or more words different from the first set of one or more words;
conditioning the diffusion model based on a set of one or more edges of the third content; and
after conditioning the diffusion model based on the set of one or more edges of the third content, generating, using the diffusion model, fourth content based on the second set of one or more words, wherein the fourth content is the same as the second content.

11. The method of any one of claims 1-10, further comprising:
receiving fifth content, wherein the fifth content is different from the first content;
receiving a third set of one or more words that are the same as the first set of one or more words;
conditioning the diffusion model based on a set of one or more edges of the fifth content; and
after conditioning the diffusion model based on the set of one or more edges of the fifth content, generating, using the diffusion model, sixth content based on the third set of one or more words, wherein the fifth content is different from the second content.

12. The method of any one of claims 1-11, further comprising:
receiving fifth content, wherein the fifth content is different from the first content;
receiving a third set of one or more words that are the same as the first set of one or more words;
conditioning the diffusion model based on a set of one or more edges of the fifth content; and
after conditioning the diffusion model based on the set of one or more edges of the fifth content, generating, using the diffusion model, sixth content based on the third set of one or more words, wherein the fifth content is the same as the second content.

13. The method of any one of claims 1-12, further comprising:
before conditioning the diffusion model based on the first content and the set of one or more edges of the first content, identifying the set of one or more edges of the first content.

14. A non-transitory computer-readable medium storing one or more programs configured to be executed by one or more processors of a device, the one or more programs including instructions for performing the method of any one of claims 1-13.

15. A device, comprising:
one or more processors; and
memory storing one or more programs configured to be executed by the one or more processors, the one or more programs including instructions for performing the method of any one of claims 1-14.
